# EUROPEAN PATENT SPECIFICATION

(11) **EP 1 505 137 B1**
(45) Date of publication and mention of the grant of the patent: **25.04.2007**
(21) Application number: 04018764.3
(22) Date of filing: 06.08.2004
(51) Int. Cl.: C09J 7/02

(54) **Adhesive sheet**
Klebefolie
Feuille adhésive

(30) Priority: 07.08.2003 JP 2003288498
(43) Date of publication of application: 09.02.2005
(73) Proprietor: Mitsui Chemicals, Inc., Tokyo (JP)
(72) Inventor: Aihara, Shin, Shinjyuku-ku Tokyo (JP); Saruwatari, Masumi, Sodegaura-shi Chiba (JP)
(74) Representative: HOFFMANN EITLE

(56) References cited:
- WO-A-00/05305
- US-B1- 6 451 425
- US-B1- 6 514 597
- PATENT ABSTRACTS OF JAPAN vol. 2002, no. 12, 12 December 2002 (2002-12-12) & JP 2002 226803 A (ACHILLES CORP), 14 August 2002 (2002-08-14)
- PATENT ABSTRACTS OF JAPAN vol. 1999, no. 12, 29 October 1999 (1999-10-29) & JP 11 193367 A (SEKISUI CHEM CO LTD), 21 July 1999 (1999-07-21)

## Description

### BACKGROUND OF THE INVENTION

### 1. Field of the Invention

The present invention relates to an adhesive sheet and in particular to an adhesive sheet used in a processing step involving cutting processing.

### 2. Description of the Related Art

As a conventional adhesive sheet, an adhesive sheet having a tackifier applied onto a substrate layer using a plastic vinyl chloride (PVC)-based sheet having a plasticizer added to vinyl chloride resin has been developed and used. The PVC-based adhesive sheet is used as an adhesive sheet for surface protection, an adhesive sheet for coating masking, and as a marking sheet.

However, the PVC-based adhesive sheet upon combustion for disposal generates a corrosive gas containing a chlorine gas and a hydrogen chloride gas to damage an incinerator, and is thus often disposed of by burying it in the ground. However, the PVC-based adhesive sheet contains a plasticizer which may have an adverse influence on the ecological system, and it is therefore desired that the PVC-based adhesive sheet having a heavy burden on the environment be not used.

Various kinds of chlorine-or plasticizer-free polyolefin (hereinafter referred to as PO) have been proposed and developed as substitutes for the PVC-based adhesive sheet.

JP-A 2004-35687 discloses a PO-based adhesive sheet which can be used suitably in marking without undergoing cutting or tearing in a release operation by prescribing 2% modulus of a substrate layer, tear strength and adhesion of the adhesive sheet in a specific range.

JP-A 11-193367 discloses.a surface protection PO-based adhesive sheet with further improvements in tear resistance by prescribing a specific resin composition of a substrate or by prescribing the thickness, tensile modulus of elasticity, and tear strength at 90° of the substrate in a specific range.

JP-A 11-21528 discloses an adhesive sheet characterized by a substrate layer having a laminate layer arranged on at least one side of a cloth made of polyolefin resin. It is described that in this prior art invention, the laminate layer is particularly an ethylene/α-olefin copolymer or syndiotactic polypropylene having a lower melting point that that of the polyolefin resin used in the cloth thereby providing a PO-based adhesive sheet capable of preventing the thermal deterioration of the cloth constituting the substrate layer, to maintain excellent mechanical strength and excellent cutting with hands.

WO00/05305 discloses a PO-based adhesive sheet characterized by a substrate layer comprising a composition having a fist polymer blended with a second polymer, each of which has a melting temperature of at least 93°C, and in a third aspect of the invention, it is disclosed that in the composition used in the substrate layer, the first polymer is at least 20% atactic, relatively soft material, while the second polymer is at least 80% syndiotactic and/or isotactic, relatively non-soft polypropylene. It is described that the PO-based adhesive sheet obtained in this prior art invention is superior in masking properties in painting an automobile and shows tearing similar to that of the PVC-based adhesive sheet.

JP-A 2002-265892 discloses an adhesive sheet substrate and an adhesive sheet having at least one layer consisting of a specific propylene polymer or at least one layer of a resin composition containing a specific propylene polymer and an olefin polymer. It is described therein that the substrate and the adhesive sheet containing a propylene polymer having a meso-pendant fraction of 0.2 to 0.6 and a racemic pendant fraction of 0.1 or less as specified steric regularity (that is, regularity regarding an atactic structure) viewed from a triad chain of propylene, thus attaining flexibility similar to that of polyvinyl chloride substrate and PVC-based adhesive sheet.

Japanese Patent No. 3007081 discloses a PO-based adhesive sheet having a substrate layer consisting of a resin composition containing an olefin polymer as a base polymer, being free of a halogen element and having an oxygen index of 22 or more. It is described that in this prior art invention, the same stretchability and hand cutting feel as those of PVC-based adhesive sheet are achieved.

However, any one of the above adhesive sheets is concerned with an adhesive sheet for surface protection, an adhesive sheet for coating masking and a masking sheet, and there is no special description on applications involving various kinds of cutting processing in electronic circuit material, semiconductor material and optical material demanding strict requirements on performance and qualities.

In the field of electronic circuit material, for example, an adhesive sheet used for the purpose of processing by treatment with chemical solutions such as plating solution and rust preventive solution (referred to hereinafter as an adhesive sheet for treatment with chemical solutions) is required to have flexibility to be contour along an uneven surface of an electrical circuit and punching processability for accurately processing an aperture subjected to plating treatment and rust preventive treatment. As an adhesive sheet used in plating and rust preventive treatment of a flexible print substrate demanding particularly strict performance and qualities as an electronic circuit material, the PO-based adhesive sheet is poor in punching processability, and thus the PVC-based adhesive sheet is mainly used.

In the fields of semiconductor material and optical material, an adhesive sheet is used for processing a wafer such as silicon wafer is used, and particularly an adhesive sheet used in cutting (dicing) processing (hereinafter referred to as dicing adhesive sheet) is required to hardly undergo chipping and pollution with cutting dust, and after the dicing processing of a wafer into small pieces, the adhesive sheet is also required to have a property (stretchability) by which the adhesive sheet can be stretched so as to broaden the intervals among the small pieces uniformly. When the adhesive sheet is required to hardly undergo chipping and pollution with cutting dust in the dicing processing and is also required to be highly stretchable, the PCV-based adhesive sheet is used

JP-A 2002-155249 discloses an adhesive sheet consisting exclusively of a PO-based polymer as a dicing adhesive sheet other than the PVC-based adhesive sheet. This publication describes that particularly chipping can be significantly prevented when evaluated under the condition of dicing processing the adhesive sheet into chips of 3x3 mm in size.

JP-A 2002-226803 discloses a polyolefin-based film of 3-layer structure comprising a polypropylene resin layer, an ethylene copolymer resin layer and a polypropylene resin layer laminated in this order. It is described therein that the polypropylene resin uses polypropylene resin containing syndiotactic polypropylene, random polypropylene etc., while the ethylene copolymer resin layer uses an ethylene/vinyl acetate copolymer, an ethylene/(meth)acrylic copolymer etc., whereby a dicing substrate film excellent in uniform stretchability can be provided. However, qualities inprocessing, such as chipping and contamination with cutting dust, are not referred to.

### SUMMARY OF THE INVENTION

The object of the present invention is to provide an adhesive sheet suitable for applications to surface protection involving cutting processing, and in particular to an adhesive sheet suitable for applications such as chemical treatment and dicing involving cutting processing in the fields of electronic circuit material, semiconductor material and optical material demanding strict requirements for performance and qualities.

In view of the problem described above, the present inventors made extensive study on an adhesive sheet having high performance qualities required in the fields of electronic circuit material, semiconductor material, and optical material and particularly excellent in cutting processability, and as a result, they found that an adhesive sheet not only attaining excellent cutting processability by prescribing the tensile modulus of elasticity and tear strength in a specific range but also achieving high performance and qualities by using a specific resin can be obtained, and the present invention was thereby completed.

That is, the present invention relates to an adhesive sheet comprising an adhesive layer laminated on at least one side of a substrate layer, wherein the adhesive sheet comprises the following requirements (a) to (d):
(a) the tensile modulus of elasticity in the machine direction (MD-M) and the tensile modulus of elasticity in the transverse direction (TD-M) at 23°C are in the range of 50 to 2000 MPa, and the ratio of the tensile modulus of elasticity in the machine direction (MD-M) to the tensile modulus of elasticity in the transverse direction (TD-M), that is, (MD-M)/(TD-M), is in the range of 0.5 to 2,
(b) the tear strength in the machine direction (MD-T) and the tear strength in the transverse direction (TD-T) at 23°C are in the range of 1 to 100 N/mm, and the ratio of the tear strength in the machine direction (MD-T) to the tear strength in the transverse direction (TD-T), that is, [(MD-T)/(TD-T)], is in the range of 0.5 to 2, and
(c) the substrate layer comprises 10 to 100 wt% of a syndiotactic propylene polymer, based on the total resin components constituting the substrate layer,
(d) the adhesive layer comprises 30 wt% or more of a mixture of one or more α-olefin copolymers based on two or more repeating (α-olefin units selected from C₂ to C₁₂ α-olefins.

In a preferable embodiment of the present invention, the adhesive layer comprises an α-olefin copolymer as a major component and is molded by co-extrusion.

The adhesive sheet of the present invention can be used preferably in application to surface protection involving cutting processing, particularly preferably in application to treatment of flexible print substrate with a chemical solution and to dicing thereof.

The present invention relates to a method of providing surface protection during cutting comprising applying the adhesive sheet to a surface to be protected and cutting the surface, a method of providing surface protection during treatment with a chemical solution comprising applying the adhesive sheet to a surface of flexible print substrate to be protected and treating the surface with a chemical solution, and a method of providingdicing comprising applying the adhesive sheet to a surface to be protected and dicing the surface.

### BRIEF DESCRIPTION OF THE DRAWINGS

Fig. 1 is a schematic sectional view showing one embodiment of the adhesive sheet of the present invention.
Fig. 2 is a schematic sectional view showing one embodiment of the adhesive sheet of the present invention.
Fig. 3 is a schematic sectional view showing one embodiment of the adhesive sheet of the present invention.
Fig. 4 is a schematic sectional view showing one embodiment of the adhesive sheet of the present invention.
Fig. 5 is a perspective view showing one embodiment of the adhesive sheet of the present invention wound in a rolled state.
Fig. 6 is another perspective view showing one embodiment of the adhesive sheet of the present invention wound in a rolled state.
Fig. 7 is another perspective view showing one embodiment of the adhesive sheet of the present invention wound in a rolled state.
Fig. 8 is a schematic view showing a test specimen in evaluation of chemical suitability.
Fig. 9 is a schematic view showing evaluation of plating suitability.
Fig. 10 is a schematic view showing evaluation of dicing suitability.
Fig. 11 is a photograph showing the back of a chip processed in Example 12.
Fig. 12 is a photograph showing the back of a chip processed in Comparative Example 3.

Meaning of symbols in the drawings is as follows: 1, substrate layer; 2, adhesive layer; 3, intermediate layer; 4, external layer; 5, release sheet; 6, core material; 10, adhesive sheet; 20, pH testing paper; 21, wafer for chemical suitability test; 30, substrate for plating suitability test; 31, residual glue; 32, soaking residue; 40, wafer for dicing suitability test; 41, frame; 42, chipping; and 43, cutting dust.

### DETAILED DESCRIPTION OF THE INVENTION

Hereinafter, the adhesive sheet of the present invention is described in more detail by reference to the accompanying drawings. In all the drawings, the same or corresponding part is expressed by the same symbol.

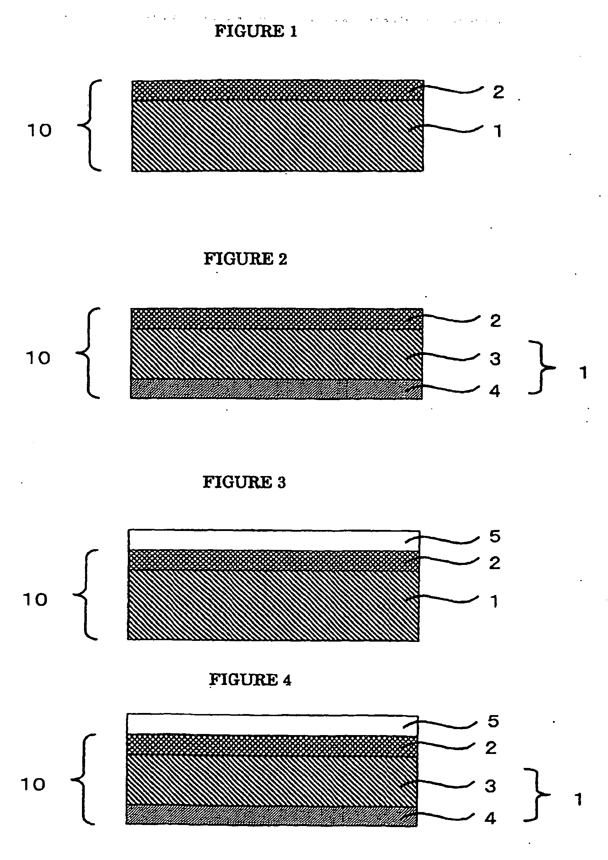

Fig. 1 is a sectional view showing one embodiment of the adhesive sheet of the present invention. As shown in Fig. 1, the adhesive sheet 10 of the present invention comprises a substrate layer 1 and an adhesive layer 2 laminated on one side of the substrate layer 1.

The tensile modulus of elasticity in the machine direction (MD-M) and the tensile modulus of elasticity in the transverse direction (TD-M) of the adhesive sheet 10 of the invention at 23°C are in the range of 50 to 2000 MPa, preferably 70 to 1500 MPa, and the ratio of the tensile modulus of elasticity in the machine direction (MD-M) to the tensile modulus of elasticity in the transverse direction (TD-M), that is, (MD-M) / (TD-M), is in the range of 0.5 to 2, preferably 0.7 to 1.5, in order to attain excellent cutting processability. The tensile modulus of elasticity is measured according to JIS K 6781.

When the tensile modulus of elasticity of the adhesive sheet 10 is less than 50 MPa, the resulting film may be elongated in the operation of attachment or release thus deteriorating workability so that even if the adhesive sheet is attached correctly, required properties such as accuracy may be hardly achieved. It is not preferable either that the tensile modulus of elasticity is higher than 2000 MPa, because the flexibility thereof to be contour along the shape of an adherend may be reduced. When the ratio of the tensile modulus of elasticity in the machine direction (MD-M) to the tensile modulus of elasticity in the transverse direction (TD-M), that is, (MD-M)/(TD-M), is less than 0.5 or higher than 2, the properties in the machine direction may be significantly different from those in the transverse direction, thus failing to attain uniform characteristics in every direction.

The tear strength in the machine direction (MD-T) and the tear strength in the transverse direction (TD-T) of the adhesive sheet 10 of the invention at 23°C are in the range of 1 to 100 N/mm, preferably 5 to 80 N/mm, and the ratio of the tear strength in the machine direction (MD-T) to the tear strength in the transverse direction (TD-T), that is, [(MD-T)/(TD-T)], is in the range of 0.5 to 2, more effectively 0.7 to 1.5.

The tear strength is measured according to JIS K 7128 (Elmendorf tear method). When the tear strength is less than 1 N/mm, the adhesive sheet may not be obtained. On the other hand, when the tear strength is higher than 100 N/mm, cutting processability may be made difficult to require special processability. When the ratio of the tear strength in the machine direction (MD-T) to the tear strength in the transverse direction (TD-T), that is, [(MD-T)/(TD-T)], is less than 0.5 or higher than 2, the properties in the machine direction may be made significantly different from those in the transverse direction, thus failing to attain uniform characteristics in every direction.

In the present invention, the substrate layer 1 preferably comprises an olefin polymer as a major component because the olefin polymer has strength to fix and retain an adherent and flexibility to make the substrate layer contour along the shape of an adherend, is inexpensive and excellent in energy saving, can be selected from materials having various properties, confers functions easily by forming a composite thereof with other materials, hardly brings about a burden on the environment, is substantially free from corrosive ions and metal ions, and easily attains strong adhesion among layers in the case of the adhesive layer formed fromapluralityof layers. In the present invention, the major component means a constituent component contained in the highest ratio than other components contained in the substrate layer.

Specifically, the olefin polymer further includes low-density polyethylene, very-low-density polyethylene, linear low-density polyethylene, moderate-density polyethylene, high-density polyethylene, and polyethylene copolymers such as copolymers comprising ethylene as main component and various vinyl compounds as minor components selected from C3 to C12 α-olefins, styrene, vinyl acetate, (meth)acrylic acid, (meth)acrylate and ionomer, which may be random or block copolymers. The olefin polymer also includes propylene homopolymers and propylene copolymers comprising propylene as a major component and ethylene or C4 to C12 α-olefins as minor components, which may be random or block copolymers. Copolymers of C4 or more α-olefins, such as polybutene and polymethylpentene, can also be mentioned.

Hereinafter, the syndiotactic propylene polymer is described.

The syndiotactic propylene polymer may be syndiotactic homopropylene or a copolymer comprises propylene, ethylene and if necessary a C4 to C20 olefin, that is, a syndiotactic propylene/ethylene copolymer or a syndiotacticpropylene/ethylene/α-olefin copolymer. The molar ratio of each of comonomers constituting the copolymer is selected preferably such that propylene is 90 to 99 mol%, ethylene is 0.5 to 9 mol%, and α-olefin is 0 to 9.5 mol%. The α-olefin used in the syndiotactic propylene/ethylene/α-olefin copolymer is used in such a range that the cuttingprocessability, flexibility and mechanical physical properties of the adhesion sheet of the present invention are not deteriorated. Examples of such α-olefins include 1-butene, 3-methyl-1-butene, 1-hexene, vinylcylohexene, 1-decene, 1-hexadecene, cyclopentene, norbornene etc.

The syndiotactic propylene copolymer is obtained by copolymerizing propylene with a small amount of comonomer in the presence of a known catalyst giving a poly-α-olefin excellent in syndiotacticity.

A repeating unit derived from propylene constituting the syndiotactic propylene polymer used in the present invention is a substantially syndiotactic structure. The syndiotacticity thereof viewed from a triad chain of propylene is preferably 0.6 or more, more preferably 0.7 or more. When the syndiotacticity is in the above range, the rate of crystallization is high, and the resulting polymer is excellent in processability. The "substantially syndiotactic structure" means that the syndiotacticity viewed from a triad chain of propylene is 0.6 or more.

The catalyst used in production of the syndiotactic propylene polymer is preferably a metallocene-based catalyst. Specifically, mention is made of a catalyst system described by J. A. Ewen et al. in J. Am. Chem. Soc., 110, 6255-6256 (1988) and catalyst systems consisting of crosslinked transition metal compounds having mutually asymmetric ligands and cocatalysts as described in JP-A 2-41303, JP-A 2-41305, JP-A 2-274703, JP-A 2-274704, JP-A 3-179005, JP-A 3-179006 and JP-A 4-69394. A catalyst system even using a catalyst having a structure different from that in the above catalyst systems can also be utilized insofar as the resulting propylene homopolymer is a relatively highly tactic polymer having a syndiotactic triad fraction (A. Zambelli et al.: Macromolecules vol 6, 687 (1973), ibid. vol. 8, 925 (1975)) in the above-mentioned range, for example 0.6 or more. As a polymerization method, either a liquid phase polymerization method such as suspension polymerization and solution polymerization or a gaseous phase polymerization method can be used.

The molecular weight of the syndiotactic propylene polymer, in terms of intrinsic viscosity determined in a tetracycline solvent at 135°C, is in the range of preferably 0.1 to 10 dl/g, more preferably 0.5 to 5.0 dl/g. The melt flow rate (at a temperature of 230°C with a loading of 21.18 N according to ASTM D-1238) is preferably 0.5 to 70 g/10 min., more preferably 5 to 30 g/10 min. The density is preferably 0.81 to 0.96 g/cm³, more preferably 0.85 to 0.93 g/cm³.

A resin containing the syndiotactic propylene polymer is used as the component constituting the substrate layer 1, by which the tensile modulus of elasticity and tear strength of the adhesion sheet 10 can be set in a preferable range, uniformity in the machine and transverse directions can be improved, and a cut processed surface can be prevented from generating fibrous burrs . The content of the syndiotactic propylene polymer based on the total resin components constituting the substrate layer 1 in the present invention is 10 to 100 wt%, more preferable 30 to 100 wt%. The syndiotactic propylene polymer includes, for example, a commercial product available under the registered trade name FINAPLAS from Atofina Petrochemicals, Inc.

The content of the olefin polymer in the substrate layer 1 is preferably 30 to 100 wt%, more preferably 50 to 100 wt%. The ethylene/α-olefin copolymer as one example of the olefin polymer improving flexibility and stretchability includes, for example, Tafmer A, Tafmer P etc. (manufactured by Mitsui Chemicals,INC.), the propylene/α-olefin coplymer includes, for example, Tafmer XR,Tafmer S etc. (manufactured by Mitusi Chemicals),and the polybutene includes Beaulon (Mitsui Chemicals,INC.).

To improve properties such as mechanical properties, heat resistance and flexibility, a synthetic resin and thermoplastic elastomer besides the olefinic polymer can be added if necessary as a constituent component of the substrate layer 1 in such a range that the performance and qualities of the adhesive sheet 10 are not deteriorated. The synthetic resin for improving mechanical properties and heat resistance includes, for example, polyamide, polyester, polyether, polycarbonate and polyurethane, and the thermoplastic elastomer for improving flexibility includes a polyethylene elastomer, polyamide elastomer, polyurethane elastomer and polyester elastomer.

The substrate layer 1 may contain various additives used generally in a substrate layer in this kind of adhesive sheet. For example, various kinds of additives such as fillers, pigments, dyes, UV absorbers, antioxidants, heat stabilizers, lubricants, weatherability stabilizers, plasticizers and crystallization nucleating agents may be contained in such a range that the performance and qualities of the adhesive sheet 10 are not adversely affected

The thickness of the substrate layer 1 is not particularly limited, and is usually 10 µm to 1 mm in consideration of cutting processability, mechanical strength, flexibility etc. required depending on the intended use, preferably 25 µm to 250 µm in respect of prevention of defects, operativeness in attachment, and price.

The adhesive layer 2 comprises 30 wt% or more of a mixture of one or more α-olefin copolymers based on two or more repeating (α-olefin units selected from C₂ to C₁₂ α-olefins.

Preferable examples of the olefin adhesive material include, but are not limited to, α-olefin copolymers described in JP-A 7-233354, JP-A 10-298514, JP-A 11-80233, JP-A 11-43655, JP-A 11-21519, JP-A 11-106716, JP-A 2002-155249 and JP-A 2002-226814.

The α-olefin copolymer is used preferably as a major component in the adhesive layer 2 so that the resulting adhesive layer can be well fixed to, and easily released from, an adherend, is substantially free from pollution of an adherend therewith, exhibits stable adhesion in an environment for storage and transport, hardly exerts a burden on the environment, hardly contains corrosive ions and metallic ions, and easily attain strong adhesion to the substrate layer.

The major component in the adhesive layer is preferably a mixture of one or more α-olefin copolymers based on two or more repeating α-olefin units selected from C2 to C12 α-olefins. The C2 to C12 α-olefins include, for example, ethylene, propylene, 1-butene, 1-pentene, 3-methyl-1-butene, 1-hexene, 4-methyl-1-pentene, 3-methyl-1-pentene, 1-heptene, 1-octene, 1-decene, 1-dodecene etc. When a copolymer comprising at least 2 kinds of monomers selected from these α-olefins is used as the major component in the adhesive layer 2, the total content of α-olefin copolymers in the adhesive layer 2 is preferably 30 wt% or more, particularly preferably 50 wt% or more.

As a constituent component in the adhesive layer 2, an ethylene/other α-olefin cooligomer or a halogen element-free thermoplastic elastomer, besides the α-olefin copolymer, can be added if necessary. The ethylene/other α-olefin cooligomer or the halogen element-free thermoplastic elastomer is added preferably to the adhesive layer 2 so that the glass transition temperature is lowered, the initial adhesion can be regulated in a suitable range, and the viscosity can be regulated in a suitable range.

It is preferable that an oxygen- or nitrogen-containing polar group or a group having an unsaturated bond is introduced to a suitable degree into a part of the α-olefin copolymer and thermoplastic elastomer, because the adhesive layer 2 after attachment can be prevented from undergoing a change in adhesion with time (due to heating, pressurization, humidity, UV rays etc.) and the processing conditions and adhesion thereof to an adherend can be optimized.

The ethylene/other α-olefin cooligomer comprises a low-molecular ethylene/other α-olefin copolymer usually having a number-average molecular weight preferably in the range of 100 to 10000, more preferably in the range of 200 to 5000.

The thermoplastic elastomer includes, for example, styrene/butadiene block copolymer (SBR), styrene/isoprene/styrene block copolymer (SIS), styrene/butadiene/styrene block copolymer (SBS), styrene/ethylene/butylene/styrene block copolymer (SEBS), styrene/ethylene/propylene/styrene block copolymer (SEPS), hydrogenated styrene/butadiene block copolymer (HSBR), styrene/ethylene/butylene/olefin (crystalline) block copolymer (SEBC), olefin (crystalline)/ethylene/butylene/olefin (crystalline) block copolymer (CEBC) etc. Examples of SIS include a product available under the registered trade name JSR SIS from JSR CORPORATION and a product available under the registered trade name Claytone D from Shell Chemicals Japan Ltd. Examples of SEPS include a product available under the registered trade name Septone from Kuraray co., Ltd. Examples of HSBR, SEBS, SEBC and CEBC include products available under the registered trade name Dynaron from JSR CORPORATION.

The adhesive layer 2 may contain various minor components in addition to the α-olefin copolymer, the ethylene/other α-olefin cooligomer and the thermoplastic elastomer in such a range that the object of the present invention is not hindered. For example, a plasticizer such as liquid butyl rubber, a tackifier such as polyterpene, etc. may be contained. In these minor components, functional groups for conferring adhesiveness and groups having unsaturated bonds are selected and the amount of the minor components blended is limited desirably to the minimum to prevent the adhesive layer 2 after attachment from undergoing a change in adhesion with time (due to heating, pressurization, humidity, UV rays etc.).

The adhesive layer in the present invention may contain various additives incorporated generally into this kind of adhesive material. For example, various kinds of additives such as pigments, dyes, UV absorbers, antioxidants, heat stabilizers, weatherability stabilizers, etc. may be contained.

The thickness of the adhesive layer 2 is not particularly limited, and is usually 1 µm to 200 µm, preferably 5 to 50 µm, in consideration of properties required depending on the intended use, such as cutting processability, tackiness, and adhesion to an uneven surface of an adherend.

The thickness of the adhesive sheet 10 as a whole is usually 10 µm to 1 mm, preferably 30 to 300 µm, in respect of prevention of defects, operativeness in attachment, and price.

The tackiness of the adhesive sheet 10 to various kinds of adherend used is not particularly limited, and is usually 0.05 to 50 N/25 mm, preferably 0.1 to 20 N/25 mm. To remove the adhesive sheet after use, the adhesive layer 2 may consists of a known switching adhesive for lowering the tackiness to a lower level or even to zero.

Fig. 2 is a sectional view showing another embodiment of the adhesive sheet of the present invention. As shown in Fig. 2, the adhesive sheet 10 of the present invention comprises a substrate layer 1 consisting of 2 layers (i.e. intermediate layer 3 and external layer 4) and an adhesive layer 2 laminated on one side of the intermediate layer 3. The intermediate layer 3 adjacent to the adhesive layer 2 preferably comprises an olefin polymer containing a syndiotactic propylene polymer, and the content thereof is usually 10 to 100 wt%, preferably 30 to 100 wt%. The olefin polymer includes those described above.

The major component in the external layer 4 is preferably low-density polyethylene, very-low-density polyethylene, linearlow-density polyethylene,moderate-density polyethylene, high-density polyethylene, and polyethylene copolymers such as copolymers comprising ethylene and various vinyl compounds such as C3 to C12 α-olefins ,styrene, vinyl acetate, (meth) acrylic acid, (meth)acrylate and ionomer. A release agent such as a reaction product of a small amount of polyvinyl alcohol or an ethylene/vinyl alcohol copolymer and long-chain alkyl isocyanate is preferably compounded in an amount of 0.1 to 5 wt%, and an adhesive sheet having an unwinding force of not higher than 5 N/25 mm can be obtained without using a release sheet.

When the substrate layer 1 comprises the intermediate layer 3 and external layer 4, the thickness of the intermediate layer 3 and external layer 4 is not particularly limited, and the thickness of the intermediate layer 3 is preferably 10 µm to 0.8 mm, particularly preferably 20 to 200 µm, and the thickness of the external layer 4 is preferable 3 to 200 µm, particularly preferably 5 to 50 µm.

When the layer based on the olefin polymer containing a syndiotactic propylene polymer is too thin in the adhesive sheet 10, fibrous burrs may be generated on a section of the substrate layer and the adhesive layer to deteriorate cutting processability. Accordingly, the thickness of the substrate layer 1 having the adhesive layer 2 laminated on one side of the substrate layer 1 consisting of a single layer is preferably at least 30% relative to the total thickness of the adhesive sheet 10, or when the adhesive layer 2 is laminated on one side of the substrate layer 1 consisting of a plurality of layers, the thickness of the intermediate layer 3 adjacent to the adhesive layer 2 is preferably at least 30% relative to the total thickness of the adhesive sheet 10.

Fig. 3 is a sectional view showing another embodiment of the adhesive sheet of the present invention. As shown in Fig. 3, the adhesive sheet 10 in the present invention comprises a substrate layer 1, an adhesive layer 2 laminated on the surface of the substrate layer 1, and a release sheet 5 arranged in the side of the adhesive layer 2.

Fig. 4 is a sectional view showing another embodiment of the adhesive sheet of the present invention. As shown in Fig. 4, the adhesive sheet 10 in the present invention comprises a substrate layer 1 consisting of 2 layers (i.e. an intermediate layer 3 and an external layer 4) and an adhesive layer 2 laminated on the surface of the intermediate layer 3, and a release sheet 5 is arranged in the side of the adhesive layer 2

The adhesive sheet 10 of the present invention is preferably a sheet having the release sheet 5 laminated in the side of the adhesive layer, in order to facilitate unwinding of the adhesive sheet, to improve the surface smoothness of the adhesive layer and to improve punching processability. For applications involving punching processing or requiring an adhesive layer on each side, a release sheet is usually used to protect the adhesive layer.

The release sheet 5 is formed from various known constituent components and is not particularly limited, but is preferably synthetic resin or coated paper not generating toxic gas such as halogen compound upon combustion treatment. In particular, coated paper having synthetic resin such as polyethylene applied onto the surface of polyester film or paper is preferable from the viewpoint of rigidity for preventing deformation to punch the adhesive sheet 10 with high accuracy, thickness and flexibility not problematic in rolling, and reduction in the amount of waste material. For example, the synthetic resin used in the release sheet 5 may contain various fillers, pigments, UVabsorbers, antioxidants, heat stabilizers, lubricants etc. in such an extent that the adhesive sheet is not adversely affected.

A release layer may be formed on the surface of the release sheet 5 adjacent to the adhesive sheet 10. In this release layer, various release agents used generally in a release layer in this kind of release sheet 5 are used. For example, long-chain alkyl release agents such as a long-chain alkyl acrylate copolymer, a long-chain alkyl vinyl ester copolymer and a long-chain alkyl vinyl ether copolymer, silicone-based release agents and fluorine-based release agents can be mentioned. The unevenness of the release sheet is transferred onto the surface of the adhesive layer, and thus the surface roughness Ra is preferably in the range of 1 to 0.01 µm. The release sheet 5 is pre ferably as thin as possible so as to be unproblematic in rolling and to reduce the amount of waste material, and the thickness is preferably 5 to 300 µm, more preferably 15 to 150 µm. A release sheet consisting of polyethylene terephthalate (PET) is for example a commercial product available under the registered trade name Tohcello Separator SP from Tohcello Co., Ltd. A release sheet consisting of coated paper is for example a commercial product available under the trade name Separate from Oji Paper Co., Ltd.

To produce the adhesive sheet, a method of laminating the adhesive layer on the surface of the substrate layer 1 is not particularly limited, and the adhesive sheet can be produced for example by a method wherein a substrate sheet (substrate layer) made of an olefin polymer previously formed by a known inflation method, T-die method, calender method or the like is subjected to surface treatment such as corona treatment, and then an adhesive material is applied thereon and dried, a method that involves applying and drying an adhesive material on a release sheet and then contact-bonding the release sheet to a previously formed substrate sheet (substrate layer) made of an olefin polymer, a method of co-extrusion of an adhesive layer and a substrate layer, or a method of laminating an adhesive layer by melt-extrusion onto a previously formed substrate layer. In these production methods, the co-extrusion method is a method of producing a laminate sheet having a multi-layer structure of predetermined thickness by melt-heating the respective materials constituting the substrate layer and the adhesive layer and subsequent extrusion-molding thereof, and is preferable in respect of high efficiency and energy saving to produce the laminate sheet inexpensively. In the co-extrusion method using amulti-layer (at lest two-layer) T-die, an adhesive sheet having one or more substrate layers and an adhesive layer can be simultaneously formed. The co-extrusion method using the multi-layer T-die includes, for example, a method that involves combining melts of the layers in a layered form, then feeding them to a flat die, and bonding them in the die (feed block method), a method that involves delivering melts of the layers into manifolds respectively in a flat die, bonding the layers in a layered form in a common place (generally before an inlet of a die slip), then feeding them to the flat die and bonding them in the die (multi-manifold method), and a method comprising the feed block method combined with the multi-manifold method.

The method of laminating the thus obtained adhesive sheet 10 on the release sheet 5 is not particularly limited, and for example a usual sheet laminating device can be used.

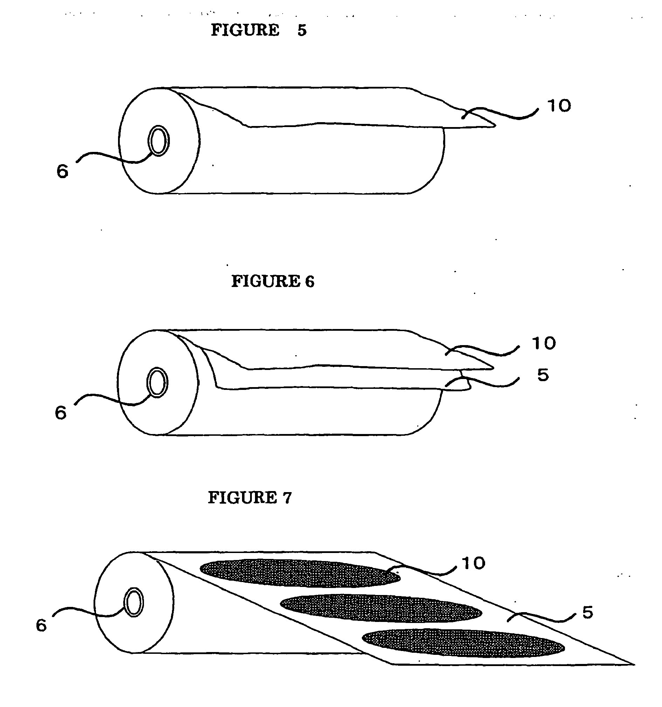

As shown in Fig. 5, the adhesive sheet 10 of the present invention can be wound around a core material 6 and stored in a rolled state, and can be used by unwinding a necessary amount of the adhesive sheet.

As shown in Fig. 6, the release sheet 5 can stuck to the adhesive layer in the adhesive sheet 10 of the present invention, then wound around a core material 6 and stored in a rolled state, and can be used by unwinding a necessary amount of the adhesive sheet and then releasing the release sheet 5.

As shown in Fig. 7, the adhesive sheet 10 of the present invention can be punched off in the most suitable shape (for example, circular) for intended use and maintained on the release sheet 5, can be wound around a core material 6 and stored in a rolled state, and can be used by unwinding a necessary amount of the adhesive sheet and releasing the release sheet 5. The shape is not particularly limited, and may be circular, square or rectangular, and for example, the adhesive sheet 10 may be left partially on the release sheet 5 and punched off inanecessary shape.

The adhesive sheet 10 according to the present invention is used in a wide variety of conventionally known applications. Applications of the adhesive sheet are not particularly limited, but are preferably applications to surface protection involving cutting processing, treatment with a chemical solution, and dicing. Hereinafter, these applications are described.

The adhesive sheet 10 of the present invention while being stuck to the surface of an adherend can be used preferably in surface protection involving cutting processing in a desired shape. For cutting processing, a method of using a rotating blade made of metal or diamond, a laser, water jetting is generally used. The adhesive sheet 10 of the present invention has the specific tensile modulus of elasticity and tear strength, can thus achieve processing with good accuracy without generating defects on a cut surface, can prevent generation of fibrous burrs or adhesion of cutting dust, and can thus be used preferably as an adhesive sheet for surface protection that involves cutting electronic circuit materials, semiconductor materials and optical materials demanding strict requirements for performance and qualities.

Hereinafter, the method of using the adhesive sheet in a plating step in the field of electronic field material is described by reference to application to chemical treatment.

First, the adhesive sheet 10 is punched off in a shape in accordance with the shape of a print substrate and a pattern of a circuit, then the adhesive sheet 10 is stuck to the print substrate if necessary by thermal contact-bonding thereby permitting the adhesive sheet to adhere completely to the print substrate. While regions for terminals to be plated, regions for terminals not to be plated and regions such as circuit are protected with high accuracy, the print substrate is dipped in a plating solution heated at about 40°C to about 95°C, then washed with water and dried, followed by removing the adhesive sheet. The adhesive sheet after use is disposed of by combustion or the like.

The print substrate comprises, for example, a circuit consisting of a conductive metal such as copper or aluminum formed on a plate-shaped substrate made of an insulator such as glass, ceramics or plastics. The thickness of the print substrate is usually several tens µm to several mm, and the area is usually several cm² to thousands cm², and the shape is circular, square, rectangular etc. The thickness of the adhesive sheet used is also cut and processed in various forms.

As plating, electric plating and electroless plating are generally known. In the electric plating, a desired metal is deposited by electric energy onto a cathode as a material to be plated in an aqueous acidic or alkaline metal electrolyte as plating solution. On one hand, the electroless plating is a method of utilizing a chemically reducing action wherein a material to be plated is dipped in a metallic salt solution containing a soluble reducing agent, a pH regulator, and a stabilizer for the plating solution to form a metallic coating on the material. The print substrate is plated with various metals such as copper, nickel, gold, palladium and tin or an alloy by electric plating or electroless plating. However, the electroless plating is used mainly for print substrate required to be thin and fine, particularly for flexible print substrate, because wiring on a material to be plated is not necessary and a plating metal film is excellent in uniformity.

However, the electroless plating is problematic in productivity because of a lower rate of deposition with metal than in electric plating. The electroless plating includes electroless nickel plating, electroless copper plating, electroless cobalt plating, electroless tin plating, electroless palladium plating, electroless silver plating and electroless gold plating, and for plating the print substrate and flexible print substrate, nickel plating, gold plating, copper plating, palladium plating and tin plating are suitably used depending on various requirements such as electrical conductivity, wear resistance, rust prevention, hardness, dimensional accuracy, weatherability, and chemical resistance. The temperature of a nickel plating solution is for example about 60 to about 95°C, and the pH is 3 (acidic) to 11 (alkaline). The temperature of a gold plating solution is about 70°C to about 80°C, and the pH is for examples 12 to 14. The temperature of a copper plating solution is 40°C to 60°C, and the pH is for example 12 to 13. In plating pretreatment, etching treatment with sulfuric acid etc. or various surface activation treatments may be suitably carried out to remove an oxide film such as copper oxide.

As the flexible print substrate is thinning in recent years, a substrate having a circuit formed with cupper foil in a thickness of 18 µm or less on a polyimide substrate sheet of 13 µm in thickness is generally used. The adhesive sheet used in a step of processing such flexible print substrate having a considerably fine and thinned circuit demands stricter requirements.

That is, the adhesive sheet demands stability to chemical treatment solutions heated at 40°C to 95°C showing acidity to alkalinity, such as plating solution and etching solution, and higher punching processability for high accuracy required of flexible print substrate.

The adhesive sheet of the present invention is free of fibrous burrs upon punching processing and excellent in processing accuracy, and also superior in stability to chemical treatment solutions such as plating solution and etching solution, and therefore, the substrate after release of the adhesive sheet is free of adhering contaminants derived from the adhesive sheet. Accordingly, the adhesive sheet 10 of the present invention can be used without any problem in qualities even if the print substrate or flexible print substrate is not washed with a Freon organic solvent, thus reducing a burden on the environment.

The adhesive sheet 10 of the present invention is preferable not only in the plating treatment but also as a protective sheet for protecting a surface not treated with a chemical in the treatment of various kinds of adherend with an acidic or alkaline chemical in a process for producing electronic circuit materials or semiconductor materials.

Now, the method of applying the adhesive sheet to dicing is described.

Application to dicing involves steps wherein the adhesive sheet 10 of the present invention is contact-bonded at room temperature or under heating to a wafer as adherend, then the wafer is cut (diced) into chips, washed and dried, the adhesive sheet is stretched, and thereafter the chips are picked up and released from the adhesive sheet. The adhesive sheet 10 of the present invention can be fixed closely to a wafer, to maintain the wafer, and thus the chips are not released in the above steps.

The wafer may be any generally solid wafer, and includes semiconductor materials for example element semiconductors such as silicon, germanium, selenium, tellurium etc.; binary compound semiconductors such as GaAs, GaP, InSb etc.; ternary compound semiconductors such as AlGaAs etc.; quaternary compound semiconductors such as AlGaInAs etc.; and metal oxide semiconductors such as SnO₂, ZnO, TiO₂, Y₂O₅ etc. The electronic circuit material is for example a material wherein an electronic circuit formed on a wafer consisting of the above semiconductor material is covered with a rigid plastic material, and the optical material includes a material consisting of glass or ceramics. The thickness of the wafer is usually several tens µm to several mm, and the area of the wafer is usually several tens cm² to thousands cm², and the shape is circle, square, rectangle, etc.

The substrate layer 1 in the present invention comprises an olefin polymer excellent not only in stretchability but also in cutting processability to prevent cutting dust generated upon cutting from growing and washing the dust away in fine form with washing water, thus being free of the cutting dust and being sufficiently stretchable after dicing.

The adhesive sheet 10 of the present invention can also prevent cutting dust from growing under dicing conditions where cutting dust is easily generated, and therefore the movement of a rotating knife of diamond is not disturbed by cutting dust, thus reducing chipping.

The adhesive sheet 10 of the present invention can reduce the wear of a metal blade or diamond blade used in punching processing and dicing processing.

The adhesive sheet 10 of the present invention can achieve accurate processing without chipping from a cut processed surface and can prevent generation of fibrous burrs and adhesion of cutting dust, and can thus be applied as an adhesive sheet for cutting processing with a laser and water jet.

### EXAMPLES

The present invention is described in more detail by reference to the Examples, but the present invention is not limited to the Examples. Hereinafter, the physical property testing methods (A) to (C) used in the present invention are described.

### (A) Tensile modulus of elasticity

According to a method of testing tensile characteristics of plastics described in JIS K7161, test specimens in the machine direction and transverse direction were prepared from an adhesive sheet and examined in a tensile test in an environment at a temperature of 23°C and a relative humidity of 50%. From tensile stress measured in distortion in two points in a stress-distortion curve obtained in this tensile test, the tensile modulus of elasticity was calculated. The tensile modulus of elasticity (23°C) shown in the Examples below is the average of at least 5 measurements, and the unit is MPa.

### (B) Tear strength

According to a tear strength test method for plastic film and sheet (2nd part: Elmendorf Tear Method) described in JIS K7128-2, test specimens in the machine direction and transverse. direction were prepared from an adhesive sheet and examined in a tear strength test in an environment at a temperature of 23°C and a relative humidity of 50%. The tear strength (23°C) shown in the Examples below is the average of at least 5 measurements, and the unit is N/mm.

### (C) Adhesion

According to an adhesion sheet test method described in JIS Z0237, an adhesion test was carried out in an environment at a temperature of 23°C and a relative humidity of 50%. Under pressurization with 2 kg rubber roll, an adhesive sheet was stuck to an SUS-BA plate as test plate, and then placed for 30 minutes in a predetermined environment at a temperature of 23°C and a relative humidity of 50%, and while the adhesive sheet was released at a direction of 180° at a rate of 300 mm/min. from the test plate, its adhesion was measured. The adhesion (23°C) shown in the Examples below is the average of at least 2 measurements, and the unit is N/25 mm.

In Examples 1 to 3, the application to surface protection is described on the basis of (D) surface protection suitability, but the present invention is not limited to the Examples.

### (Example 1)

As the material of each layer constituting the adhesive sheet 10, the following materials were used. That is, 30 parts by weight of syndiotactic propylene polymer (s-PP; FINAPLAS^{™} 1571; density 0. 87 g/cm³; Atofina Petrochemicals, Inc.), 10 parts by weight of high-density polyethylene (HDPE; density 0. 96 g/cm³) and 60 parts by weight of low-density polyethylene (LDPE; density 0.92 g/cm³) were used as the component constituting the substrate layer 1, and 60 parts by weight of a propylene/1-butene/4-methyl-1-pentene copolymer (PB(4-MP); 43 mol% propylene component, 26 mol% 1-butene component, 31 mol% 4-methyl-1-pentene component), 5 parts by weight of an ethylene/propylene copolymer (EP-A; 81 mol% ethylene component, 19 mol% propylene; density 0.87 g/cm³), 15 parts by weight of the same LDPE as in the substrate layer 1, 15 parts by weight of a styrene/isoprene/styrene block copolymer (SIS; SIS5229N manufactured by JSR CORPORATION), and 5 parts by weight of an ethylene/α-olefin cooligomer (LEO; Lucant^{™} HC-20 manufactured byMitsui Chemicals, INC.) were usedas the component constituting the adhesive layer 2.

Then, the material of each layer was melted in an extruder equipped with a full-flighted screw. Molding conditions (melting temperature) were 220°C for the adhesive layer and 230°C for the substrate layer 1, and molten resins of the 2 layers were laminated in a multi-layer die (co-extrusion temperature: 230°C). The extruded adhesive sheet 10 was cooled, slit and wound around a core material 6.

The adhesive sheet 10 thus obtained was a laminate of the single substrate layer 1 and the adhesive layer 2, and the thickness of each layer was 8 µm for the adhesive layer 2 and 42 µm for the substrate layer 1, and the total thickness was 50 µm.

(A) Tensile modulus of elasticity, (B) tear strength and (C) adhesion were examined according to the methods of testing physical properties described above, and the results are shown.

### (A) Tensile modulus of elasticity (23°C)

Tensile modulus of elasticity in the machine direction (MD-M): 240 MPa

Tensile modulus of elasticity in the transverse direction (TD-M): 170 MPa

### (B) Tear strength (23°C)

| | |
|---|---|
| Tear strength in the machine direction (MD-T): | 30 N/mm |
| Tear strength in the transverse direction (TD-T) : | 58 N/mm |

### (C) Adhesion (to the SUS-BA plate at 23°C)

1.2 N/25 mm

Hereinafter, the resulting adhesive sheet 10 was evaluated according to (D) surface protection suitability shown below.

### (D) Surface protection suitability

The adhesive sheet as test specimen was closely stuck to an acrylic plate of 300 mmx300 mmx1 mm thickness and placed for 30 minutes in a drying oven set at a temperature of 80°C, and subjected to cutting processing with a rotating blade.

Evaluation criteria were as follows: the adhesive sheet not generating fibrous burrs on a cut processed surface without contamination with adhering cutting dust was regarded as passing the examination (designated O), and the adhesive sheet generating fibrous burrs on a cut processed surface or undergoing contamination with adhering cutting dust was regarded as not passing the examination (designated ×). The presence or absence of fibrous burrs or contaminants such as residual glue was judged by observation under an optical microscope (x200).

It was revealed that the resulting adhesive sheet 10 is excellent in application to surface protection involving cutting processing.

Table 1 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 2. The results of evaluation of the surface protection suitability (D) of the resulting adhesive sheet 10 are shown in Table 3.

### (Example 2)

As the material of each layer constituting the adhesive sheet 10, the following materials were used. That is, 60 parts by weight of the same s-PP as in Example 1, 30 parts by weight of a propylene/ethylene/1-butene random copolymer (r-PP: 5 mol% ethylene component, 5 mol% 1-butene component) and 10 parts by weight of the same HDPE as inExample 1 were used as the component of the intermediate layer 3 in the substrate layer 1, 80 parts by weight of the same HDPE as in Example 1 and 20 parts by weight of the same LDPE as in Example 1 were used as the component of the external layer 4 in the substrate layer 1, and 60 parts by weight of the same PB(4-MP) as in Example 1, 5 parts by weight of the same EP-A as in Example 1, 10 parts by weight of a propylene polymer (h-PP; density 0.91 g/cm³), 10 parts by weight of a styrene/ethylene/butylene/styrene block copolymer (SEBS-A; DYNARON^{™} 9901P manufactured by JSR CORPORATION), 10 parts by weight of the same SIS as in Example 1, and 5 parts by weight of the same LEO as in Example 1 were used as the component of the adhesive layer 2.

Then, the material of each layer was melted in an extruder equipped with a full-flighted screw. Molding conditions (melting temperature) were 230°C for the adhesive layer 2, 230°C for the intermediate layer 3 and 220°C for the external layer 4, andmolten resins of the 3 layers were laminated in amulti-layer die (co-extrusion temperature: 230°C). The extruded adhesive sheet 10 was cooled, slit and wound around a core material 6. The adhesive sheet 10 thus obtained was a laminate of the 2-layer substrate layer 1 and the adhesive layer 2, and the thickness of each layer was 8 µm for the adhesive layer 2, 34 µm for the intermediate layer 3, and 8 µm for the external layer 4, and the total thickness was 50 µm.

Table 1 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 2. The results of evaluation of the surface protection suitability (D) of the resulting adhesive sheet 10 are shown in Table 3.

### (Example 3)

As the material of each layer constituting the adhesive sheet 10, the following materials were used. That is, 90 parts by weight of the same s-PP as in Example 1 and 10 parts by weight of the same HDPE as in Example 1 were used as the component of the intermediate layer 3 in the substrate layer 1, the same component in the same ratio as in Example 2 was used as the component of the external layer 4 in the substrate layer 1, and the same component in the same ratio as in Example 2 was used as the component of the adhesive layer 2.

Then, the material of each layer was melted in an extruder equipped with a full-flighted screw. Molding conditions (melting temperature) were 230°C for the adhesive layer 2, 230°C for the intermediate layer 3 and 220°C for the external layer 4, andmolten resins of the 3 layers were laminated in amulti-layer die (co-extrusion temperature: 230°C). The extruded adhesive sheet 10 was cooled, slit and wound around a core material 6. The adhesive sheet 10 thus obtained was a laminate of the 2-layer substrate layer 1 and the adhesive layer 2, and the thickness of each layer was 8 µm for the adhesive layer 2, 24 µm for the intermediate layer 3, and 8 µm for the external layer 4, and the total thickness was 40 µm.

Table 1 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 2. The results of evaluation of the surface protection suitability (D) of the resulting adhesive sheet 10 are shown in Table 3.

**Table 1.**

| | Release sheet 5 | Adhesive sheet 10 | | | | | |
|---|---|---|---|---|---|---|---|
| | ○: present | Adhesive layer 2 | | Substrate layer 1 | | | |
| | -: absent | Constituent | | Constituent component of | | | |
| | Type | component:weight | | each layer: weight ratio | | | |
| | Thickness t(µm) | ratio | | Thickness t (µm) | | | |
| | | Thickness t (µm) | | Intermediate layer 3 | | External layer 4 | |
| | - | PB(4MP) | 60 | s-PP | 30 | | |
| | | EP-A | 5 | HDPE | 10 | | |
| Example 1 | | LDPE | 15 | LDPE | 60 | | |
| | | SIS | 15 | | | | |
| | | LEO | 5 | | | | |
| | | t=8 | | t=42 | | | |
| | - | PB(4MP) | 60 | s-PP | 60 | HDPE | 80 |
| | | EP-A | 5 | r-PP | 3.0 | LDPE | 20 |
| | | h-PP | 10 | HDPE | 10 | | |
| Example 2 | | SEBS-A | 10 | | | | |
| | | SIS | 10 | | | | |
| | | LEO | 5 | | | | |
| | | t=8 | | t=34 | | t=8 | |
| | - | PB(4MP) | 60 | s-PP | 90 | HDPE | 80 |
| | | EP-A | 5 | HDPE | 10 | LDPE | 20 |
| | | h-PP | 10 | | | | |
| Example 3 | | SEBS-A | 10 | | | | |
| | | SIS | 10 | | | | |
| | | LEO | 5 | | | | |
| | | t=8 | | t=24 | | t=8 | |

**Table 2.**

| | (A) Tensile modulus of elasticity | | | (B) Tear strength | | | (C) Adhesion (N/25 mm) |
|---|---|---|---|---|---|---|---|
| | MD-M (MPa) | TD-M (MPa) | MD-M/ TD-M (-) | MD-T (N/mm) | TD-T (N/mm) | MD-T/ TD-T (-) | |
| Example 1 | 240 | 170 | 1.41 | 30 | 58 | 0.52 | 1.2 |
| Example 2 | 520 | 420 | 1.24 | 17 | 23 | 0.74 | 1.5 |
| Example 3 | 450 | 440 | 1.02 | 6.5 | 6.2 | 1.05 | 1.5' |

**Table 3.**

| | (D) Surface protection suitability |
|---|---|
| Example 1 | ○ |
| Example 2 | ○ |
| Example 3 | ○ |

In Examples 4 to 6 and Comparative Example 1, suitable application to chemical treatment is described on the basis of evaluationof (E) chemical treatment suitability, but the present invention is not limited to the Examples.

### (Example 4)

As the material of each layer constituting the adhesive sheet 10, the following materials were used. That is, 80 parts by weight of the same s-PP as in Example 1 and 20 parts by weight of the same h-PP as in Example 2 were used as the component of the substrate layer 1, and 70 parts by weight of the same PB(4-MP) as in Example 1, 5 parts by weight of the same EP-A as in Example 1, 10 parts by weight of the same h-PP as in Example 2, and 15 parts by weight of an olefin (crystalline)/ethylene/butylene/olefin (crystalline) block copolymer (DYNARON^{™} 6200P manufactured by JSR CORPORATION) were used as the component of the adhesive layer 2 in Example 1.

Then, the material of each layer was melted in an extruder equipped with a full-flighted screw. Molding conditions (melting temperature) were 230°C for the adhesive layer 2 and 230°C for the substrate layer 1, andmolten resins of the 2 layers were laminated in a multi-layer die (co-extrusion temperature: 230°C). The extruded adhesive sheet 10 was cooled, provided with Tohcello Separator^{™} SP T18 (PET-SP, thickness 50 µm; manufactured by Tohcello) as a release sheet 5 on the adhesive layer, and then slit and wound. The adhesive sheet 10 thus obtained was a laminate of the 2-layer substrate layer 1 and the adhesive layer 2, and the thickness of each layer was 20 µm for the adhesive layer 2 and 100 µm for the substrate layer 1, and the total thickness was 120 µm.

Hereinafter, the resulting adhesive sheet 10 was evaluated according to (E) chemical treatment suitability shown below.

### (E) Chemical treatment suitability

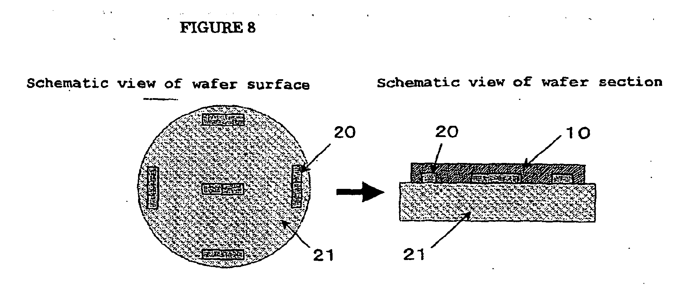

As shown in a schematic view of wafer surface in Fig. 8, a silicon wafer of φ100 mm was used as wafer 21 for chemical suitability test, on which pH testing papers 20 were placed, and as shown in a sectional view of wafer in Fig. 8, the adhesive sheet 10 of φ98 mm punched off was stuck closely thereto, then placed in an environment at a temperature of 23°C under 50% relative humidity for 30 minutes, and dipped at a temperature of 23°C for 30 minutes in 3 kinds of chemical solutions, that is, HF/HNO₃/CH₃COOH = 1/9/3 (hydrofluoric acid/nitric acid/acetic acid), HCl/HNO₃ = 1/3 (aqua regia), and 10% NH₄OH (ammonia water).

The evaluation criteria were as follows: When the pH testing paper maintained the color of pH 7 and simultaneously the wafer 21 was not contaminated with residual glue, the adhesive sheet was regarded as passing the test (designated O); when the pH testing paper maintained the color of pH 7 and simultaneously contaminants occurred around only the adhesive sheet 10 stuck to the wafer 21 for chemical suitability test, the adhesive sheet was regarded unsuitable (designated Δ) ; and when the pH testing paper was changed, or when contaminants such as residual glue occurred on the wafer 21 for chemical suitability test, the adhesive sheet was regarded as not passing the test (designated x). Whether contaminants such as residual glue occurred or not was judged by observation under an optical microscope (x200). When judged to be unsuitable, contaminants occurring around the adhesive sheet 10 couldbe removed by washing with water; when the contaminants could not be removed, the adhesive sheet was evaluated as not passing the test.

It was revealed that the resulting adhesive sheet 10 did not permit the pH testing paper to be changed with any chemical solutions such as hydrogen fluoride/nitric acid/acetic acid, aqua regia and ammonia water, and was free of contaminants and superior in application to acidic to alkali chemical treatment.

Table 4 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 5. The results of evaluation of (E) chemical treatment suitability of the resulting adhesive sheet 10 are shown in Table 6.

### (Example 5)

As the material of each layer constituting the adhesive sheet 10, the following materials were used. That is, 40 parts by weight of the same s-PP as in Example 1, 40 parts by weight of the same h-PP as in Example 2, 10 parts by weight of the same HDPE as in Example 1, and 10 parts by weight of PP-based blue dye (b-dye; 5B-E5133MB Blue manufactured by Nippon Pigment Co., Ltd.) were used as the component of the intermediate layer 3 in the substrate layer 1, 100 parts by weight of the same HDPE as in Example 1 were used as the component of the external layer 4 in the substrate layer 1, and 70 parts by weight of the same PB(4-MP) as in Example 1, 6 parts by weight of the same CEBC as in Example 4, 6 parts by weight of the same SIS as in Example 1, 15 parts by weight of a styrene/ethylene/butylene/styrene. (crystalline) block copolymer (SEBS-A; DYNARON^{™} 9901P manufactured by JSR CORPORATION), and 3 parts by weight of the same LEO as in Example 1 were used as the component of the adhesive layer 2.

Then, the material of each layer was melted in an extruder equipped with a full-flighted screw. Molding conditions (melting temperature) were 220°C for the adhesive layer 2, 230°C for the intermediate layer 3, and 220°C for the external layer 4, andmolten resins of the 3 layers were laminated in amulti-layer die (co-extrusion temperature: 230°C). The extruded adhesive sheet 10 was cooled, then provided on the adhesive layer with the same PET-SP (thickness 50 µm) as release sheet 5 as in Example 4, slit and wound on the core material 6.

The adhesive sheet 10 thus obtained was a laminate of the 2-layer substrate layer 1 and the adhesive layer 2, and the release sheet 5 was arranged in the side of the adhesive layer, and the thickness of each layer was 20 µm for the adhesive layer 2, 70 µm for the intermediate layer 3, and 10 µm for the external layer 4, and the total thickness was 100 µm.

Table 4 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 5. The results of evaluation of the chemical treatment suitability (E) of the resulting adhesive sheet 10 are shown in Table 6.

### (Example 6)

As the material of each layer constituting the adhesive sheet 10, the following materials were used. That is, 40 parts by weight of the same s-PP as in Example 1, 40 parts by weight of the same r-PP as in Example 2, 10 parts by weight of the same HDPE as in Example 1, and 10 parts by weight of the same b-dye as in Example 5 were used as the component of the intermediate layer 3 in the substrate layer 1, 100 parts by weight of the same HDPE as in Example 1 were used as the component of the external layer 4 in the substrate layer 1, and the same component in the same ratio as in the adhesive layer 2 in Example 5 was used as the component of the adhesive layer 2.

Then, the material of each layer was melted in an extruder equipped with a full-flighted screw. Molding conditions (melting temperature) were 220°C for the adhesive layer 2, 230°C for the intermediate layer 3, and 220°C for the external layer 4, and molten resins of the 3 layers were laminated in amulti-layer die (co-extrusion temperature: 230°C). The extruded adhesive sheet 10 was cooled, then provided on the adhesive layer with the same PET-SP (thickness 50 µm) as release sheet 5 as in Example 4, slit and wound on the core material 6.

The adhesive sheet 10 thus obtained was a laminate of then 2-layer substrate layer 1 and the adhesive layer 2, and the release sheet 5 was arranged in the side of the adhesive layer, and the thickness of each layer was 20 µm for the adhesive layer 2, 70 µm for the intermediate layer 3, and 10 µm for the external layer 4, and the total thickness was 100 µm.

Table 4 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 5. The results of evaluation of (E) chemical treatment suitability of the resulting adhesive sheet 10 are shown in Table 6.

### (Comparative Example 1)

As the material of each layer constituting the adhesive sheet 10, the following materials were used. That is, 70 parts by weight of the same h-PP as in Example 2, 20 parts by weight of the same HDPE as in Example 1, and 10 parts by weight of the same b-dye as in Example 5 were used as the component of the intermediate layer 3 in the substrate layer 1, 100 parts by weight of the same HDPE as in Example 1 was used as the component of the external layer 4 in the substrate layer 1, and the same component in the same ratio as in the adhesive layer 2 in Example 5 was used as the adhesive layer 2.

Then, the material of each layer was melted in an extruder equipped with a full-flighted screw. Molding conditions (melting temperature) were 220°C for the adhesive layer 2, 230°C for the intermediate layer 3, and 220°C for the external layer 4, andmolten resin of the 3 layers were laminated in a multi-layer die (co-extrusion temperature: 230°C). The extruded adhesive sheet 10 was cooled, then provided on the adhesive layer with the same PET-SP (thickness 50 µm) as release sheet 5 as in Example 4, slit and wound on the core material 6.

The adhesive sheet 10 thus obtained was a laminate of the 2-layer substrate layer 1 and the adhesive layer 2, and the release sheet 5 was arranged in the side of the adhesive layer, and the thickness of each layer was 20 µm for the adhesive layer 2, 70 µm for the intermediate layer 3, and 10 µm for the external layer 4, and the total thickness was 100 µm.

Table 4 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 5. The results of evaluation of the chemical treatment suitability (E) of the resulting adhesive sheet 10 are shown in Table 6.

In the adhesive sheet 10 in Comparative Example 1, the ratio of the tensile modulus of elasticity in the machine direction to the tensile modulus of elasticity in the transverse direction [(MD-M)/(TD-M)] is higher than 2, and the ratio of the tear strength in the machine direction to the tear strength in the transverse direction [(MD-T)/(TD-T)] is less than 0.5, and in the evaluation of the chemical treatment suitability (E), the chemical permeated through burrs generated around the adhesive sheet upon punching, to discolor the pH testing paper, and the adhesive sheet was evaluated as not passing the test (x) .

**Table 4.**

| | Adhesive sheet 5 | Adhesive sheet 10 | | | | | |
|---|---|---|---|---|---|---|---|
| | ○: present | Adhesive layer 2 | | Substrate layer 1 | | | |
| | -: absent | Constituent | | Constitutional component of each | | | |
| | Type | component: weight | | layer: weight ratio | | | |
| | Thickness t (µm) | ratio | | Thickness t of each layer (µm) | | | |
| | | Thickness t (µm) | | Intermediate layer 3 | | External layer 4 | |
| | ○ | PB(4MP) | 70 | s-PP | 80 | | |
| | PET-SP | EP-A | 5 | h-PP | 20 | | |
| Example 4 | | h-PP | 10 | | | | |
| | | CEBC | 15 | | | | |
| | t=50 | t=20 | | t=100 | | | |
| | ○ | PB(4MP) | 70 | s-PP | 40 | HDPE | 100 |
| | PET-SP | CEBC | 6 | h-PP | 40 | | |
| Example 5 | | SIS | 6 | HDPE | 10 | | |
| | | SEBS-A | 15 | b-dye | 10 | | |
| | | LEO | 3 | | | | |
| | t=50 | t=20 | | t=70 | | t=10 | |
| | ○ | PB(4MP) | 70 | s-PP | 40 | HDPE | 100 |
| | PET-SP | CEBC | 6 | r-PP | 40 | | |
| | | SIS | 6 | HDPE | 10 | | |
| Example 6 | | SEBS-A | 15 | b-dye | 10 | | |
| | | LEO | 3 | | | | |
| | t=50 | t=20 | | t=70 | | t=10 | |
| | ○ | PB(4MP) | 70 | h-PP | 70 | HDPE | 100 |
| | PET-SP | CEBC | 6 | HDPE | 20 | | |
| Comparative | | SIS | 6 | b-dye | 10 | | |
| Example 1 | | SEBS-A | 15 | | | | |
| | | LEO | 3 | | | | |
| | t=50 | t=20 | | t=70 | | t=10 | |

**Table 5.**

| | (A) Tensile modulus of elasticity | | | (B) Tear strength | | | (C) Adhesion (N/25 mm) |
|---|---|---|---|---|---|---|---|
| | MD-M (MPa) | TD-M (MPa) | MD-M/ TD-M (-) | MD-T (N/mm) | TD-T (N/nun) | MD-T/ TD-T (-) | |
| Example 4 | 560 | 570 | 1.04 | 8 | 9 | 0.89 | 2.1 |
| Example 5 | 900 | 730 | 1.23 | 8:1 | 11 | 0.74 | 4.2 |
| Example 6 | 620 | 550 | 1.13 | 14 | 20 | 0.70 | 4.2 |
| Comparative Example 1 | 1360 | 610 | 2.19 | 12 | 25 | 0.48 | 4.2 |

**Table 6.**

| | (E) Chemical treatment suitability | | |
|---|---|---|---|
| | Hydorofluoric acid/nitric acid/acetic acid | Aqua regia | Ammonia water |
| Example 4 | ○ | ○ | ○ |
| Example 5 | ○ | ○ | ○ |
| Example 6 | ○ | ○ | ○ |
| Comparative Example 1 | × | × | × |

In Examples 7 to 9 and Comparative Example 2, the application to chemical treatment of flexible print substrate is described on the basis of (F) plating suitability, but the present invention is not limited to the Examples.

### (Example 7)

As the material of each layer constituting the adhesive sheet 10, the following materials were used. That is, 60 parts by weight of the same s-PP as in Example 1, 32 parts by weight of the same h-PP as in Example 2, 2 parts by weight of the same HDPE as in Example 1 and 6 parts by weight of the same b-dye as in Example 5 were used as the component of the substrate layer 1, and 62 parts by weight of the same PB(4-MP) as in Example 1, 3 parts by weight of the same h-PP as in Example 2, 10 parts by weight of the same CEBC as in Example 4, parts by weight of the same SIS as in Example 1 and 3 parts by weight of the same LEO as in Example 1 were used as the component of the adhesive layer 2.

Then, the material of each layer was melted in an extruder equipped with a full-flighted screw. Molding conditions (melting temperature) were 220°C for the adhesive layer 2 and 230°C for the substrate layer 1, and molten resins of the 2 layers were laminated in a multi-layer die (co-extrusion temperature: 230°C). The extruded adhesive sheet 10 was cooled, then provided with Separator 64GPA(P) White (GP-SP; thickness 95 µm, a coated sheet having glassine paper as a core material, manufactured by Oji Paper) as release sheet 5 on the adhesive layer, then slit and wound. The adhesive sheet 10 thus obtained was a laminate of the 2-layer substrate layer 1 and the adhesive layer 2, and the thickness of each layer was 15 µm for the adhesive layer 2 and 60 µm for the substrate layer 1, and the total thickness was 75 µm.

Hereinafter, the resulting adhesive sheet 10 was evaluated according to (F) plating suitability shown below.

### (F) Plating suitability

The plating suitability in the present invention was evaluated on the basis of observation results in (1) plating resistance and (2) plating operativeness after plating on flexible print substrate under the following test conditions.

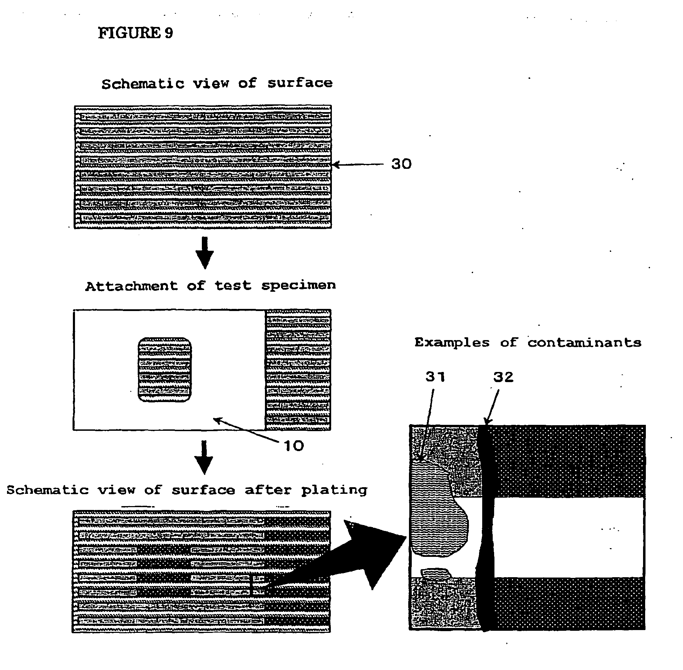

As shown in the schematic view of surface in Fig. 9, a flexible print substrate (copper wire width 25 µm; interval 25 µm) having a circuit consisting of copper foil formed on a polyimide substrate, which was prepared by subjecting Neoflex manufactured by Mitsui Chemicals,INC. (NEX-131R (13H); polyimide substrate thickness, 13 µm; copper foil, 18 µm) to etching treatment with an aqueous ferric chloride solution, was used. A plating test substrate 10 (40 mm×100 mm) as a test specimen having a punched opening (5 mm×10 mm) in the center thereof was contact-bonded thereto by rolling under heating at 80°C, then made free of oxides such as copper oxide with an acidic etching solution (pH 1) consisting of sulfuric acid and ammonium hydrogen fluoride, washed with water, dipped in a nickel plating solution (pH 4) heated at 85°C for 30 minutes, washed with water at 20°C, dipped in a gold plating solution (pH 13) heated at 80°C for 20 minutes, washed with water at 20°C and dried, followed by releasing the adhesive sheet as the test specimen, to form a plated substrate for evaluation. The nickel plating solution used was an electroless Ni-P alloy plating bath (pH 4) based on nickel sulfate (0.1 M), sodium phosphinate (0.3 M), sodium acetate (0.12 M), succinic acid (0.08 M), lactic acid (0.33 M), citric acid (0.05 M) and phosphonic acid (0.38 M), and the gold plating solution used was an electroless gold plating bath (pH 13) based on potassium gold cyanide (0.03 M), potassium cyanide (0.1 M), potassium hydroxide (0.2 M) and potassium borohydride (0.1 M). Without washing with an organic solvent such as Freon, the plated test substrate was observed under an optical microscope (×200) to determine whether residual glue 31 and soaking plating solution 32 were present or not, and plating resistance was evaluated according to the following criteria.

### (1) Evaluation criteria of plating resistance

In the plating suitability test substrate 30 from which the test specimen 10 was released after plating, as shown in the schematic sectional view after plating in Fig. 9, the region covered with the test specimen was a non-plated region, and the portion not covered with the test specimen was a plated region, and the border therebetween is a plated edge. In the contaminants shown in Fig. 9, the residual glue 31 is a contaminant occurring in the non-plated region and derived from the adhesive layer, while the soaking residue 32 is a contaminant occurring in the plated edge and derived from a component in the plating bath or the adhesive layer. The adhesive sheet not observed to cause the residual glue and soaking residue under an optical microscope (x200) was evaluated as being absent in residual glue and soaking residue.

The adhesive sheet causing no residual glue or soaking residue on 5 plating test substrates was regarded as passing the test (designated O), and the adhesive sheet causing residual glue or soaking residue was regarded as not passing the test (designated ×).

The 5 plating test substrates used in the test were observed for abnormalities such as bending and wrinkles, and plating operativeness was evaluated under the following criteria.

### (2) Evaluation criteria of plating operativeness

The adhesive sheet causing no bending or wrinkles on the 5 plating test substrates was regarded as passing the test (designated O), and the adhesive sheet causing bending or wrinkles was regarded as not passing the test (designated ×).

In the evaluation criteria in the plating suitability test described above, the adhesive sheet passing both (1) plating resistance and (2) plating operativeness was regarded as being excellent in plating suitability in the present invention.

The resulting adhesive sheet 10 was revealed to be excellent in (1) plating resistance and (2) plating operativeness and thus preferable for application to plating.

Table 7 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 8. The results of evaluation of the plating suitability (F) of the resulting adhesive sheet 10 are shown in Table 9.

### (Example 8)

As the material of each layer constituting the adhesive sheet 10, the following materials were used. That is, the same component in the same weight ratio as in the substrate layer 1 in Example 7 was used as the intermediate layer 3 in the substrate layer 1, 80 parts by weight of the same HDPE as in Example 1 and 20 parts by weight of the same LDPE as in Example 1 were used as the component of the external layer 4 in the substrate layer 1, and the same component in the same weight ratio as in the adhesive layer 2 in Example 7 was used as the component of the adhesive layer 2.

Then, the material of each layer was melted in an extruder equipped with a full-flighted screw. Molding conditions (melting temperature) were 220°C for the adhesive layer 2, 230°C for the intermediate layer 3 and 220°C for the external layer 4, andmolten resins of the 3 layers were laminated in amulti-layer die (co-extrusion temperature: 230°C). The extruded adhesive sheet 10 was cooled, the provided on the adhesive layer with the same GP-SP (thickness 95 µm) as release sheet 5 as in Example 7, slit and wound on the core material 6.

The adhesive sheet 10 thus obtained was a laminate of the 2-layer substrate layer 1 and the adhesive layer 2, and the release sheet 5 was arranged in the side of the adhesive layer, and the thickness of each layer was 15 µm for the adhesive layer 2, 52 µm for the intermediate layer 3, and 8 µm for the external layer 4, and the total thickness was 75 µm.

Table 7 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 8. The results of evaluation of the plating suitability (F) of the resulting adhesive sheet 10 are shown in Table 9.

### (Example 9)

As the material of each layer constituting the adhesive sheet 10, the following materials were used. That is, 42 parts by weight of the same s-PP as in Example 1 were used as the component of the intermediate layer 3 in the substrate layer 1, 42 parts by weight of the same r-PP as in Example 2, 10 parts by weight of an ethylene/butane copolymer (EB-A; density 0.87 g/cm³) and 6 parts by weight of the same b-dye as in Example 5 were used as the component of the intermediate layer 3 in the substrate layer 1, the same component in the same weight ratio as in the external layer 4 in Example 8 were used as the external layer 4 in the substrate layer 1, and the same component in the same ratio as in the adhesive layer 2 in Example 7 was used as the adhesive layer 2.

Then, the material of each layer was melted in an extruder equipped with a full-flighted screw. Molding conditions (melting temperature) were 220°C for the adhesive layer 2, 230°C for the intermediate layer 3 and 220°C for the external layer 4, andmolten resins of the 3 layers were laminated in amulti-layer die (co-extrusion temperature: 230°C). The extruded adhesive sheet 10 was cooled, provided on the adhesive layer with the same GP-SP (thickness 95 µm) as release sheet 5 as in Example 7, slit and wound on the core material 6.

The adhesive sheet 10 thus obtained was a laminate of the 2-layer substrate layer 1 and the adhesive layer 2, and the release sheet 5 was arranged in the side of the adhesive layer, and the thickness of each layer was 15 µm for the adhesive layer 2, 52 µm for the intermediate layer 3, and 8 µm for the external layer 4, and the total thickness was 75 µm.

Table 7 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 8. The results of evaluation of the plating suitability (F) of the resulting adhesive sheet 10 are shown in Table 9.

### (Comparative Example 2)

As the material of each layer constituting the adhesive sheet 10, the following materials were used. That is, 84 parts by weight of the same r-PP as in Example 2, 10 parts by weight of the same EB-A as in Example 9, and 6 parts by weight of the same b-dye as in Example 5 were used as the component of the intermediate layer 3 in the substrate layer 1, the same component in the same weight ratio as in the external layer 4 in Example 8 was used as the external layer 4 in the substrate layer 1, and the same component in the same ratio as in the adhesive layer 2 in Example 7 was used as the adhesive layer 2.

Then, the material of each layer was melted in an extruder equipped with a full-flighted screw. Molding conditions (melting temperature) were 220°C for the adhesive layer 2, 230°C for the intermediate layer 3 and 220°C for the external layer 4, andmolten resins of the 3 layers were laminated in amulti-layer die (co-extrusion temperature: 230°C). The extruded adhesive sheet 10 was cooled, then provided on the adhesive layer with the same GP-SP (thickness 95 µm) as release sheet 5 as in Example 7, slit and wound on the core material 6.

The adhesive sheet 10 thus obtained was a laminate of the 2-layer substrate layer 1 and the adhesive layer 2, and the release sheet 5 was arranged in the side of the adhesive layer, and the thickness of each layer was 15 µm for the adhesive layer 2, 52 µm for the intermediate layer 3, and 8 µm for the external layer 4, and the total thickness was 75 µm.

Table 7 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 8. The results of evaluation of the plating suitability (F) of the resulting adhesive sheet 10 are shown in Table 9.

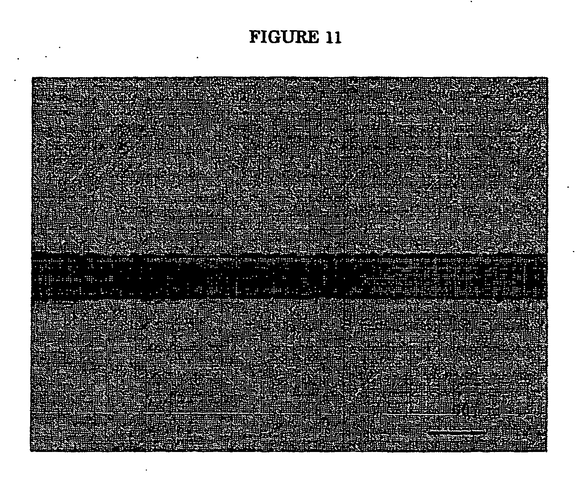

In the adhesive sheet 10 in Comparative Example 2, the ratio of the tear strength in the machine direction to the tear strength in the transverse direction [(MD-T) / (TD-T)] was higher than 2, and in the evaluation of the plating suitability (F), the adhesive sheet did not pass the plating resistance (1) and designated (x) because the chemical solution permeated through burrs generated around the adhesive sheet upon punching, to generate the soaking residue 32 as shown in Fig. 11.

**Table 7.**

| | Adhesive sheet 5 | Adhesive sheet 10 | | | | | |
|---|---|---|---|---|---|---|---|
| | ○: present | Adhesive layer 2 | | Substrate layer 1 | | | |
| | -: absent | Constituent | | Constitutional component of each | | | |
| | Type | component: weight | | layer: weight ratio | | | |
| | Thickness t (µm) | ratio | | Thickness t of each layer (µm) | | | |
| | | Thickness t (µm) | | Intermediate | | External layer 4 | |
| | | | | layer 3 | | | |
| | ○ | PB(4MP) | 62 | s-PP | 60 | | |
| | GP-SP | h-PP | 3 | h-PP | 32 | | |
| Example 7 | | CEBC | 10 | HDPE | 2 | | |
| | | SIS | 22 | b-dye | 6 | | |
| | | LEO | 3 | | | | |
| | t=95 | t=15 | | t=60 | | | |
| | ○ | PB(4MP) | 62 | s-PP | 60 | HDPE | 80 |
| | GP-SP | h-PP | 3 | h-PP | 32 | LDPE | 20 |
| Example 8 | | CEBC | 10 | HDPE | 2 | | |
| | | SIS | 22 | b-dye | 6 | | |
| | | LEO | 3 | | | | |
| | t=95 | t=15 | | t=52 | | t=8 | |
| | ○ | PB(4MP) | 62 | s-PP | 42 | HDPE | 80 |
| | GP-SP | h-PP | 3 | r-PP | 42 | LDPE | 20 |
| Example 9 | | CEBC | 10 | EB-A | 10 | | |
| | | SIS | 22 | b-dye | 6 | | |
| | | LEO | 3 | | | | |
| | t=95 | t=15 | | t=52 | | t=8 | |
| | ○ | PB (4MP) | 62 | r-PP | 84 | HDPE | 80 |
| | GP-SP | h-PP | 3 | EB-A | 10 | LDPE | 20 |
| Comparative | | CEBC | 10 | b-dye | 6 | | |
| Example 2 | | SIS | 22 | | | | |
| | | LEO | 3 | | | | |
| | t=95 | t=15 | | t=52 | | T=8 | |

**Table 8.**

| | (A) Tensile modulus of elasticity | | | (B) Tear strength | | | (C) Adhesion (N/25mm) |
|---|---|---|---|---|---|---|---|
| | MD-M (MPa) | TD-M (MPa) | MD-M/TD-M (-) | MD-T (N/nun) | TD-T (N/mm) | MD-T/TD-T (-) | |
| Example 7 | 560 | 570 | 1.04 | 8.1 | 9.0 | 0.90 | 4.2 |
| Example 8 | 630 | 580 | 1.09 | 6.5 | 6.2 | 1.05 | 4.2 |
| Example 9 | 500 | 490 | 1.02 | 54 | 38 | 1.42 | 4.2 |
| Comparative Example 2 | 600 | 560 | 1.07 | 72 | 31 | 2.32 | 4.2 |

**Table 9.**

| | (F) Plating suitability | |
|---|---|---|
| | (1) Plating resistance | (2) Plating operativeness |
| Example 7 | ○ | ○ |
| Example 8 | ○ | ○ |
| Example 9 | ○ | ○ |
| Comparative Example 2 | × | ○ |

In Examples 10 to 11 and Comparative Example 3, the application to dicing is described on the basis of (G) dicing suitability, but the present invention is not limited to the Examples.

### (Example 10)

As the material of each layer constituting the adhesive sheet 10, the following materials were used. That is, 20 parts by weight of the same s-PP as in Example 1, 40 parts by weight of the same EB-A as in Example 9 and 40 parts by weight of the same LDPE as in Example 1 were used as the component of the intermediate layer 3 in the substrate layer 1, 100 parts by weight of the same LDPE as in Example 1 were used as the component of the external layer 4 in the substrate layer 1, and 60 parts by weight of the same PB (4-MP) as in Example 1, 10 parts by weight of the same CEBC as in Example 4, 10 parts by weight of the same SIS as in Example 1, 15 parts by weight of a styrene/ethylene/butylene/styrene block copolymer (DYNARON^{™} 8601P manufactured by JSR CORPORATION) and 5 parts by weight of the same LEO as in Example 1 were used as the component of the adhesive layer 2.

Then, the material of each layer was melted in an extruder equipped with a full-flighted screw. Molding conditions (melting temperature) were 220°C for the adhesive layer, 230°C for the intermediate layer 3 and 220°C for the external layer 4, and molten resins of the 3 layers were laminated in amulti-layer die (co-extrusion temperature: 230°C). The extruded adhesive sheet 10 was cooled, then provided with Tohcello Separator^{™} SPT18 (PET-SP, thickness 31 µm) as release sheet 5 on the adhesive layer, slit and wound on the core material 6.

The adhesive sheet 10 thus obtained was a laminate of the 2-layer substrate layer 1 and the adhesive layer 2, and the release sheet 5 was arranged in the side of the adhesive layer, and the thickness of each layer was 15 µm for the adhesive layer 2, 75 µm for the intermediate layer 3, and 10 µm for the external layer 4, and the total thickness was 100 µm.

The resulting adhesive sheet 10 was evaluated according to the (G) dicing suitability shown below.

### (G) Dicing suitability

The dicing suitability in the present invention was evaluated by dicing a silicon wafer under the following test conditions, and then examining it on the basis of observation results in (1) chip fixation, (2) chipping, (3) contamination, (4) stretchability, and (5) pickup.

### (1) Chip fixation

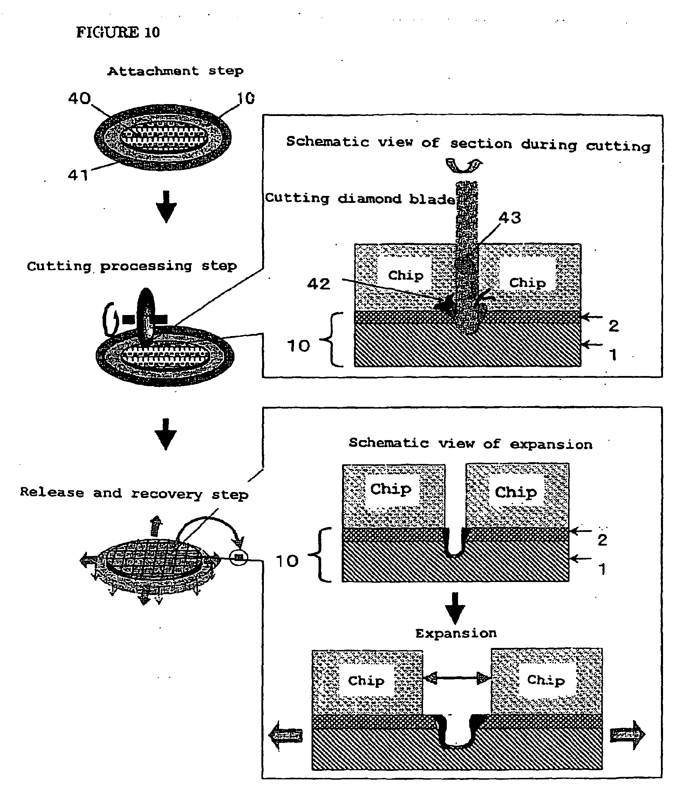

As shown in the attachment step in Fig. 10, an abraded backside (finish roughness: #2000) of φ150 mm silicon wafer 40 (P type, thickness 600 µm) as dicing suitability test wafer 21 was stuck to frame 41 (MDFTF-2-6-1H manufactured by Disco) via test adhesive sheet 10 with a mounter (HS-7800 manufactured by Hugle Electronics) at an attachment temperature (50°C) at which chipping did not occur, then set in a dicer (DAD320 manufactured by Disco), and cut with a blade (type, NBC-ZH-205F-SE; size, 27HEGH) rotating at 40000 rpm at a cutting speed of 60 mm/sec. such that the film was full-cut to a depth of 30 µm with cutting water (water at a constant temperature of 20°C) jetted at 1.0 L/min. from a nozzle to the surface of the wafer and at 1.0 L/min. from a nozzle to the rotating blade, to dice the wafer into 1 mmx1 mm square chips.

The evaluation criteria of chip fixation were as follows: the adhesive sheet not permitting triangular chips of at least 0.1 mm² to be scattered from the edge of the 6-inch wafer was regarded as passing the test (designated O), and the adhesive sheet permitting one or more triangular chips to be scattered was regarded as not passing the test (designated x).

### (2) Chipping and (3) contamination

As shown in the attachment step in Fig. 10, an abraded backside (finish roughness: #2000) of φ150 mm silicon wafer 40 (P type, thickness 600 µm) as dicing suitability test wafer 21 was stuck to frame 41 (MDFTF-2-6-1H manufactured by Disco) via test adhesive sheet 10 with a mounter (HS-7800 manufactured by Hugle Electronics) at an attachment temperature (50°C) at which chipping did not occur, then set in a dicer (DAD320 manufactured by Disco), and cut with a blade (type, NBC-ZH-205F-SE; size, 27HEGH) rotating at 40000 rpm at a cutting speed of 60 mm/sec. such that the film was full-cut to a depth of 30 µm with cutting water (water at a constant temperature of 20°C) jetted at 1.0 L/min. from a nozzle to the surface of the wafer and at 1.0 L/min. from a nozzle to the rotating blade, to dice the wafer into 0.95 mm×17.39 mm square chips.

The evaluation criteria of chipping (2) were as follows: As shown in the schematic view at the time of cutting in the cutting processing step shown in Fig. 10, 100 chips selected at random from one wafer were measured for the maximum length (µm) of chipping 42 occurring in.a cut surface under an optical microscope (x200). The adhesive sheet wherein the length of the chipping 42 in the 100 chips was 15 µm or less was regarded as passing the test (designated ○), and the adhesive sheet wherein the chipping 42 was longer than 15 µm was regarded as not passing the test (designated x).

The evaluation criteria of contamination (3) were as follows: As shown in the schematic view at the time of cutting in the cutting processing step shown in Fig. 10, 100 chips selected at random from one wafer were used to determine whether cutting dust 43 occurred or not by observation under an optical microscope (×200). The adhesive sheet not causing the chips to be contaminated with cutting dust 43 or with contaminant water was regarded as passing the test (designated O), and the adhesive sheet causing one or more chips to be contaminated with cutting dust 43 or with contaminant water was regarded as not passing the test (designated ×).

### Evaluation of stretchability (4)

As shown in the attachment step in Fig. 10, an abraded backside (finish roughness: #2000) of φ150 mm silicon wafer 40 (P type, thickness 400 µm) as dicing suitability test wafer 21 was stuck to frame 41 (MDFTF-2-6-1H manufactured by Disco) via test adhesive sheet 10 with a mounter (HS-7800 manufactured by Hugle Electronics) at an attachment temperature (50°C) at which chipping did not occur, then set in a dicer (DAD320 manufactured by Disco), and cut with a blade (type, NBC-ZH-205O-SE; size, 27HEDD) rotating at 30000 rpm at a cutting speed of 70 mm/sec. such that the film was full-cut to a depth of 30 µm with cutting water (water at a constant temperature of 20°C) jetted at 1.5 L/min. from a nozzle to the surface of the wafer and at 1.0 L/min. from a nozzle to the rotating blade, to dice the wafer into 3 mmx3 mm square chips.

Using a wafer stretching machine (HS-1800 manufactured by Hugle Electronics), the adhesive sheet after the dicing processing, to which the wafer had been stuck. was pushed upwards in a room-temperature atmosphere (23°C, relative humidity 50%) to a stroke of 20 mm with a cylindrical pressing device of 180 mm in diameter, to broaden the intervals among the chips stuck to the adhesive sheet. As shown in the schematic sectional view at the time of stretching shown in the release and recovery step in Fig. 10, evaluation of stretching was evaluated as follows: the adhesive sheet satisfying the following 3 items (a) to (c) was regarded as passing the test (designated O), and the adhesive sheet failing to satisfy any one of the items was regarded as not passing the test (designated ×).

Item (a) : The thickness of the adhesive sheet contacting with the edge of the pressing device is 90% or more relative to the thickness of the non-contacting region, that is, there is no necking.

Item (b): The broadened interval between chips is 200 µm or more.

Item (c): The ratio of chip interval in the machine direction to that in the transverse direction is from 0.7 to 1.3.

### (5) Pickup

As shown in the attachment step in Fig. 10, an abraded backside (finish roughness: #2000) of φ150 mm silicon wafer 40 (P type, thickness 400 µm) as dicing suitability test wafer 21 was stuck to frame 41 (MDFTF-2-6-1H manufactured by Disco) via test adhesive sheet 10 with a mounter (HS-7800 manufactured by Hugle Electronics) at an attachment temperature (50°C) at which chipping did not occur, then set in a dicer (DAD320 manufactured by Disco), and cut with a blade (type, NBC-ZH-205O-SE; size, 27HEDD) rotating at 30000 rpm at a cutting speed of 70 mm/sec. such that the film was full-cut to a depth of 30 µm with cutting water (water at a constant temperature of 20°C) jetted at 1.5 L/min. from a nozzle to the surface of the wafer and at 1.0 L/min. from a nozzle to the rotating blade, to dice the wafer into 5 mmx5 mm square chips.

Using a pick and place device (DE35 manufactured by Hugle Electronics), the adhesive sheet after dicing processing was pulled downwards to a level of 5 mm at room temperature (23°C), to broaden the intervals among chips, and then a raising needle with a round top (r = 250 µm) and a height of 0.8 mm was used to pick the chips up with a pickup interval of 0.8 second, to determine the rate of capture (%), and pickup was evaluated under the following criteria: Pickup of 49 chips (1 tray) was carried out 3 times, and the adhesive sheet permitting all the chips to be picked up was regarded as passing the test (designated O), and the adhesive sheet not permitting one or more chips to be picked up was regarded as not passing the test (designated x).

The resulting adhesive sheet 10 was revealed to be excellent in all items (1) chip fixation, (2) chipping, (3) contamination, (4) stretchability and (5) pickup and suitable for application to silicon wafer dicing.

Table 10 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 11. The results of evaluation of the dicing suitability (G) of the resulting adhesive sheet 10 are shown in Table 12.

### (Example 11)

As the material of each layer constituting the adhesive sheet 10, the following materials were used. That is, 70 parts by weight of the same s-PP as in Example 1, 28 parts by weight of the same EB-A as in Example 9 and 2 parts by weight of the same HDPE as in Example 1 were used as the component of the intermediate layer 3 in the substrate layer 1, the same component in the same ratio as in the external layer 4 in Example 10 was used as the component of the external layer 4 in the substrate layer 1, and the same component in the same ratio as in the adhesive layer 2 in Example 10 was used as the component of the adhesive layer 2.

Then, the material of each layer was melted in an extruder equipped with a full-flighted screw. Molding conditions (melting temperature) were 220°C for the adhesive layer 2, 230°C for the intermediate layer 3 and 220°C for the external layer 4, andmolten resins of the 3 layers were laminated in amulti-layer die (co-extrusion temperature: 230°C). The extruded adhesive sheet 10 was cooled, then provided on the adhesive layer with the same PET-SP (thickness 31 µm) as release sheet 5 as in Example 10, slit and wound on the core material 6.

The adhesive sheet 10 thus obtained was a laminate of the 2-layer substrate layer 1 and the adhesive layer 2, and the release sheet 5 was arranged in the side of the adhesive layer, and the thickness of each layer was 15 µm for the adhesive layer 2, 75 µm for the intermediate layer 3, and 10 µm for the external layer 4, and the total thickness was 100 µm.

Table 10 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 11. The results of evaluation of the dicing suitability (G) of the resulting adhesive sheet 10 are shown in Table 12.

Fig. 11 is a photograph of the backside of a chip as a typical example of 100 chips under an optical microscope, which was evaluated for chipping (2) and contamination (3). The adhesive sheet 10 shown in Fig. 11 was excellent where chipping 42 and cutting dust 43 shown in the schematic sectional view of Fig. 10 were not observed.

### (Comparative Example 3)

As the material of each layer constituting the adhesive sheet 10, the following materials were used. That is, 70 parts by weight of the same r-PP as in Example 2, 28 parts by weight of the same EB-A as in Example 9 and 2 parts by weight of the same HDPE as in Example 1 were used as the component of the intermediate layer 3 in the substrate layer 1, the same component in the same ratio as in the external layer 4 in Example 10 was used as the component of the external layer 4 in the substrate layer 1, and the same component in the same ratio as in the adhesive layer 2 in Example 10 was used as the component of the adhesive layer 2.

Then, the material of each layer was melted in an extruder equipped with a full-flighted screw. Molding conditions (melting temperature) were 220°C for the adhesive layer 2, 230°C for the intermediate layer 3 and 220°C for the external layer 4, andmolten resins of the 3 layers were laminated in amulti-layer die (co-extrusion temperature: 230°C). The extruded adhesive sheet 10 was cooled, then provided on the adhesive layer with the same PET-SP (thickness 31 µm) as release sheet 5 as in Example 10, slit and wound on the core material 6.

The adhesive sheet 10 thus obtained was a laminate of the 2-layer substrate layer 1 and the adhesive layer 2, and the release sheet 5 was arranged in the side of the adhesive layer, and the thickness of each layer was 15 µm for the adhesive layer 2, 75 µm for the intermediate layer 3, and 10 µm for the external layer 4, and the total thickness was 100 µm.

Table 10 shows the layer constitution of the adhesive sheet 10, the component constituting each layer and the weight ratio thereof, and the thickness of each layer. The tensile modulus of elasticity (A), tear strength (B) and adhesion (C) of the resulting adhesive sheet 10 were examined, and the results are shown in Table 11. The results of evaluation of the dicing suitability (G) of the resulting adhesive sheet 10 are shown in Table 12.

In the adhesive sheet 10 in Comparative Example 3, the tear strength in the machine direction (MD-T) was higher than 100 N/mm, and the ratio of the tear strength in the machine direction to the tear strength in the transverse direction [(MD-T) / (TD-T)] was higher than 2, and in the evaluation of the dicing suitability (G), the adhesive sheet failed to pass the items (2) chipping and (3) contamination, and was designated (x).

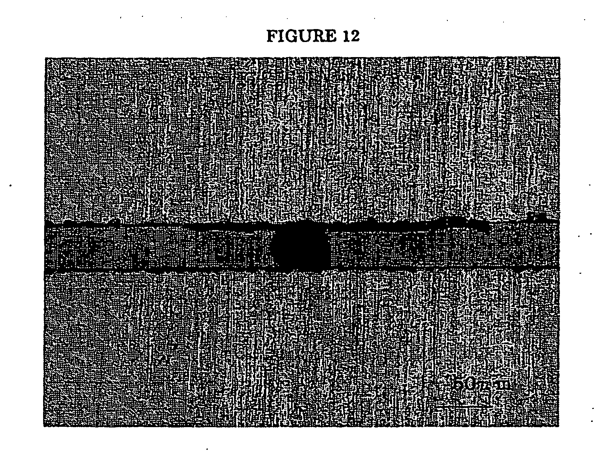

Fig. 12 is a photograph of the backside of a chip as a typical example of 100 chips under an optical microscope, which was evaluated for chipping (2) and contamination (3). Fig. 12 shows cutting dust 43 estimated to generate the chipping 42 shown in the schematic sectional view of Fig. 10.

**Table 10.**

| | Adhesive sheet 5 | Adhesive sheet 10 | | | | | |
|---|---|---|---|---|---|---|---|
| | ○: present | Adhesive layer 2 | | Substrate layer 1 | | | |
| | -: absent | Constituent | | Constitutional component of each | | | |
| | Type | component: weight | | layer: weight ratio | | | |
| | Thickness t (µm) | ratio | | Thickness t of each layer t (µm) | | | |
| | | Thickness t (µm) | | Intermediate | | External layer 4 | |
| | | | | layer 3 | | | |
| | ○ | PB (4MP) | 60 | s-PP | 20 | LDPE | 100 |
| | PET-SP | CEBC | 10 | EB-A | 40 | | |
| Example 10 | | SIS | 10 | LDPE | 40 | | |
| | | SEBS-B | 15 | | | | |
| | | LEO | 5 | | | | |
| | t=31 | t=15 | | t=75 | | t=10 | |
| | ○ | PB(4MP) | 60 | s-PP | 70 | LDPE | 100 |
| | PET-SP | CEBC | 10 | EB-A | 28 | | |
| Example 11 | | SIS | 10 | HDPE | 2 | | |
| | | SEBS-B | 15 | | | | |
| | | LEO | 5 | | | | |
| | t=31 | t=15 | | t=75 | | t=10 | |
| | ○ | PB(4MP) | 60 | r-PP | 70 | LDPE | 100 |
| | PET-SP | CEBC | 10 | EB-A | 28 | | |
| Comparative | | SIS | 10 | HDPE | 2 | | |
| Example 3 | | SEBS-B | 15 | | | | |
| | | LEO | 5 | | | | |
| | t=31 | t=15 | | t=75 | | t=10 | |

**Table 11.**

| | (A) Tensile modulus of elasticity | | | (B) Tear strength | | | |
|---|---|---|---|---|---|---|---|
| | MD-M (MPa) | TD-M (Mpa) | MD-M/ TD-M (-) | MD-T (N/mm) | TD-T (N/mm) | MD-T/ TD-T (-) | (C) Adhesion (N/25mm) |
| Example 10 | 240 | 170 | 1.41 | 30 | 52 | 0.58 | 5.1 |
| Example 11 | 280 | 280 | 1.00 | 17 | 22 | 0.77 | 5.1 |
| Comparative Example 3 | 450 | 480 | 0.94 | 120 | 41 | 2.93 | 5.1 |

**Table 12:**

| | (G) Dicing suitability | | | | |
|---|---|---|---|---|---|
| | (1) Chip fixation | (2) Chipping | (3) Contamination | (4) Stretchability | (5) Pickup |
| Example 10 | ○ | ○ | ○ | ○ | ○ |
| Example 11 | ○ | ○ | ○ | ○ | ○ |
| Comparative Example 3 | ○ | × | × | ○ | ○ |

### Industrial Applicability

The adhesive sheet of the present invention can be used as a surface protection sheet in applications to surface protection involving cutting processing, chemical treatment with etching solution and plating solution, and silicon wafer dicing, particularly in the fields of electronic circuit material, semiconductor material and optical material demanding strict requirements for performance and qualities, and has extremely high industrial applicability.

In addition, the adhesive sheet of the present invention is an adhesive sheet which is capable of solving the environmental problem of PVC-based adhesive sheet and further capable of solving problems such as easy contamination with residual glue, and has extremely high industrial applicability.

Specifically, the effect of the present invention is as follows:

According to the present invention, there can be provided an adhesive sheet having suitable tensile modulus of elasticity and tear strength and excellent in uniformity in the machine and transverse directions, thus attaining cutting processability without causing fibrous burrs on a cut surface.

According to the present invention, there can be provided a PO-based adhesive sheet which is a material not detrimental to the environment and characterized by energy saving and being stable and substantially free from corrosive ions and metallic ions, thus making it suitable for applications to chemical treatment or dicing involving cutting processing, particularly in the fields of electric circuit material, semiconductor material and optical material demanding strict requirements for performance, qualities and loading on the environment.

Specifically, the adhesive sheet of the present invention is excellent without burrs in any direction in an opening upon application to partial treatment of the adhesive sheet provided with the opening, with a chemical solution in rust prevention treatment or gold plating treatment of terminals in a flexible print substrate, thus providing the flexible print substrate with high qualities.

Further, the adhesive sheet of the present invention can solve contamination with cutting dust or chipping in dicing a semiconductor wafer, to provide semiconductor chips with high qualities.

## Claims

1. An adhesive sheet comprising an adhesive layer laminated on at least one side of a substrate layer, wherein the adhesive sheet comprises the following requirements (a) to (d),
(a) the tensile modulus of elasticity in the machine direction (MD-M) and the tensile modulus of elasticity in the transverse direction (TD-M) at 23°C are in the range of 50 to 2000 MPa, and the ratio of the tensile modulus of elasticity in the machine direction (MD-M) to the tensile modulus of elasticity in the transverse direction (TD-M), that is, (MD-M)/(TD-M), is in the range of 0.5 to 2,
(b) the tear strength in the machine direction (MD-T) and the tear strength in the transverse direction (TD-T) at 23°C are in the range of 1 to 100 N/mm, and the ratio of the tear strength in the machine direction (MD-T) to the tear strength in the transverse direction (TD-T), that is, [(MD-T)/(TD-T)], is in the range of 0.5 to 2, and
(c) the substrate layer comprises 10 to 100 wt% of a syndiotactic propylene polymers based on the total resin components constituting the substrate layer,
(d) the adhesive layer comprises 30 wt% or more of a mixture of one or more α-olefin copolymers based on two or more repeating α-olefin units selected from C₂ to C₁₂ α-olefins.

2. The adhesive sheet according to claim 1, wherein the adhesive layer is molded by co-extrusion.

3. The adhesive sheet according to claim 1, which further comprises a release sheet laminated on the side of the adhesive layer

4. A method of providing surface protection during cutting comprising applying the adhesive sheet according to claim 1 to a surface to be protected and cutting the surface.

5. A method of providing surface protection during treatment with a chemical solution comprising applying the adhesive sheet according to claim 1 to a surface of flexible print substrate to be protected and treating the surface with a chemical solution.

6. A method of providing dicing comprising applying the adhesive sheet according to claim 1 to a surface to be protected and dicing the surface.

7. The adhesive sheet according to claim 1, wherein the adhesive layer comprises an ethylene/other α-olefin cooligomer or a halogen element-free thermoplastic elastomer.

## Patentansprüche

1. Klebefolie, umfassend eine Klebemittelschicht, die auf zumindest eine Seite einer Substratschicht laminiert ist, worin die Klebefolie die folgenden Erfordernisse (a) bis (d) umfasst :
(a) das Zugelastizitätsmodul in Maschinenrichtung (MD-M) und das Zugelastizitätsmodul in Querrichtung (TD-M) bei 23°C liegen im Bereich von 50 bis 2.000 MPa, und das Verhältnis des Zugelastizitätsmoduls in Maschinenrichtung (MD-M) zum Zugelastizitätsmodul in Querrichtung (TD-M), d.h. (MD-M)/(TD-M), liegt im Bereich von 0,5 bis 2,
(b) die Reissfestigkeit in Maschinenrichtung (MD-T) und die Reissfestigkeit in Querrichtung (TD-T) bei 23°C liegen im Bereich von 1 bis 100 N/mm, und das Verhältnis der Reissfestigkeit in Maschinenrichtung (MD-T) zur Reissfestigkeit in Querrichtung (TD-T), d.h. (MD-T)/(TD-T), liegt im Bereich von 0,5 bis 2,
(c) die Substratschicht umfasst 10 bis 100 Gew.% eines syndiotaktischen Propylenpolymers, bezogen auf die gesamten Harzkomponenten, die die Substratschicht aufbauen, und
(d) die Klebemittelschicht umfasst 30 Gew.% oder mehr einer Mischung von einem oder mehreren α-Olefin-Copolymeren, die auf zwei oder mehreren α-Olefin-Wiederholungseinheiten basieren, die aus C₂₋₁₂-α-Olefinen ausgewählt sind.

2. Klebefolie gemäss Anspruch 1, worin die Klebemittelschicht durch Coextrusion geformt ist.

3. Klebefolie gemäss Anspruch 1, die ferner eine Ablösefolie umfasst, die auf die Seite der Klebemittelschicht laminiert ist.

4. Verfahren zum Bereitstellen von Oberflächenschutz während des Schneidens, umfassend das Auftragen der Klebefolie gemäss Anspruch 1 auf eine zu schützende Oberfläche und Schneiden der Oberfläche.

5. Verfahren zum Bereitstellen von Oberflächenschutz während der Behandlung mit einer Chemikalienlösung, umfassend das Auftragen der Klebefolie gemäss Anspruch 1 auf eine zu schützende Oberfläche eines flexiblen Drucksubstrats und Behandeln der Oberfläche mit einer Chemikalienlösung.

6. Verfahren zum Bereitstellen von Würfeln, umfassend das Auftragen der Klebefolie gemäss Anspruch 1 auf eine zu schützende Oberfläche und Würfeln der Oberfläche.

7. Klebefolie gemäss Anspruch 1, worin die Klebemittelschicht ein Ethylen/anderes α-Olefin-Cooligomer oder ein von Halogenelementen freies, thermoplastisches Elastomer umfasst.

## Revendications

1. Feuille adhésive comprenant une couche adhésive stratifiée sur au moins un côté d'une couche de substrat, dans laquelle la feuille adhésive comprend les exigences suivantes (a) à (d) :
(a) le module d'élasticité en traction dans la direction machine (MD-M) et le module d'élasticité en traction dans la direction transversale (TD-M) à 23 °C sont dans la plage de 50 à 2 000 MPa, et le rapport du module d'élasticité en traction dans la direction machine (MD-M) sur le module d'élasticité en traction dans la direction transversale (TD-M), c'est-à-dire (MD-M) / (TD-M), est dans la plage de 0,5 à 2,
(b) la résistance au déchirement dans la direction machine (MD-T) et la résistance au déchirement dans la direction transversale (TD-T) à 23 °C sont dans la plage de 1 à 100 N/mm, et le rapport de la résistance au déchirement dans la direction machine (MD-T) sur la résistance au déchirement dans la direction transversale (TD-T), c'est-à-dire [(MD-T) / (TD-T)], est dans la plage de 0,5 à 2, et
(c) la couche de substrat comprend 10 à 100 % en poids d'un polymère de propylène syndiotactique, sur la base des composants de résine totaux constituant la couche de substrat,
(d) la couche adhésive comprend 30 % en poids ou plus d'un mélange d'un ou plusieurs copolymères d'α-oléfine basés sur deux ou plusieurs unités α-oléfine répétitives sélectionnées parmi les α-oléfines C₂ à C₁₂.

2. Feuille adhésive selon la revendication 1, dans laquelle la couche adhésive est moulée par coextrusion.

3. Feuille adhésive selon la revendication 1, qui comprend en outre une feuille de libération stratifiée sur le côté de la couche adhésive.

4. Procédé pour réaliser une protection de surface pendant la découpe comprenant l'application de la feuille adhésive selon la revendication 1 sur une surface à protéger et la découpe de la surface.

5. Procédé pour réaliser une protection de surface pendant un traitement avec une solution chimique comprenant l'application de la feuille adhésive selon la revendication 1 sur une surface de substrat d'impression souple à protéger et le traitement de la surface avec une solution chimique.

6. Procédé pour réaliser un découpage en dés comprenant l'application de la feuille adhésive selon la revendication 1 sur une surface à protéger et le découpage en dés de la surface.

7. Feuille adhésive selon la revendication 1, dans laquelle la couche adhésive comprend un co-oligomère d'éthylène / autre α-oléfine ou un élastomère thermoplastique exempt d'élément halogène.
